# EUROPEAN PATENT SPECIFICATION

(11) **EP 4 349 601 B1**
(45) Date of publication and mention of the grant of the patent: **09.12.2026**
(21) Application number: 24159584.2
(22) Date of filing: 10.02.2020
(51) Int. Cl.: B29C 64/106, B29B 7/00, B29B 7/74, B29C 64/209, B29C 64/336, B33Y 10/00, B33Y 30/00, B33Y 40/10, B33Y 70/00, B33Y 80/00, B29B 7/32

(54) **COREACTIVE THREE-DIMENSIONAL PRINTING OF PARTS**
KOAKTIVES DREIDIMENSIONALES DRUCKEN VON TEILEN
IMPRESSION TRIDIMENSIONNELLE CORÉACTIVE DE PIÈCES

(30) Priority: 11.02.2019 US 201962803670 P
(43) Date of publication of application: 10.04.2024
(62) Document number(s) of the earlier application(s) in accordance with Art. 76 EPC: 20709449.1 / 3 924 166
(73) Proprietor: PPG Industries Ohio, Inc., Cleveland, OH 44111 (US)
(72) Inventor: Kutchko, Cynthia, Pittsburgh, Pennsylvania, 15239 (US); Epstein, Eric S., Pittsburgh, Pennsylvania, 15215 (US); Wilkinson, Bryan W., Pitsburgh, Pennsylvania, 15222 (US); Bubas, Michael A., Pittsburgh, Pennsylvania, 15215 (US)
(74) Representative: f & e patent

(56) References cited:
- WO-A1-2018/106822
- US-A1- 2016 332 382
- US-A1- 2019 037 969

## Description

### FIELD

The field relates to an apparatus for coreactive three-dimensional printing of parts using coreactive compositions. Coreactive three-dimensional printing can be used to fabricate parts having a wide range of properties.

### BACKGROUND

Three-dimensional printing of polymeric articles is typically performed using thermoplastics. Thermoplastic filament is fed into a heating element, the thermoplastic is heated above its glass transition temperature, and an article is fabricated by depositing successive layers of the molten thermoplastic. The high viscosity of the thermoplastic and the need to heat the thermoplastic to elevated temperatures can limit the amounts and types of materials that can be incorporated into the polymer matrix. Also, the thermal transport associated with heating the thermoplastic filament and depositing the molten thermoplastic filament before it cools below the glass transition temperature can limit the speed at which thermoplastic articles can be fabricated using three-dimensional printing methods. Thermal transport constraints can also limit the speed at which large parts, such as vehicle parts, can be fabricated using three-dimensional printing methods because of the time it can take to heat a thick thermoplastic material above its glass transition temperature without degrading the thermoplastic.

Methods of printing articles using three-dimensional printing are described in US 2019/0037969 A1.

### SUMMARY

Described herein are methods of fabricating a part using coreactive three-dimensional printing, which comprise: combining and mixing a first component and a second component to form a coreactive composition, wherein the coreactive composition comprises a first reactive compound and a second reactive compound; and the first reactive compound is reactive with the second reactive compound; depositing the coreactive composition in successive layers using three-dimensional printing to fabricate a part; and while depositing the coreactive composition, independently changing the constituents of the first component and/or the constituents of the second component and/or changing a volume mix ratio of the first component and the second component. The disclosed methods do not fall within the scope of the appended claims.

According to the present invention, the claimed apparatus for coreactive three-dimensional printing, comprise: an extrusion nozzle; a mixer coupled to the extrusion nozzle; a first primary pump coupled to the mixer and a second primary pump coupled to the mixer; a first primary reservoir coupled to the first primary pump and a second primary reservoir coupled to the second primary pump; one or more secondary reservoirs coupled to the first primary reservoir through respective secondary pumps and/or one or more secondary reservoirs coupled to the second primary reservoir through respective secondary pumps; and a controller interconnected to the first primary pump and the second primary pump, wherein the controller is configured to change a volume mix ratio of a first component being pumped by the first primary pump and a second component being pumped by the second primary pump, wherein the extrusion nozzle comprises a coextrusion nozzle.

### BRIEF DESCRIPTION OF THE DRAWINGS

The drawings described herein are for illustration purposes only. The drawings are not intended to limit the scope of the invention defined by the appended claims.
FIG. 1 shows a schematic of an example of a multicomponent extruder for use in coreactive three-dimensional printing.
FIG. 2 shows a three-dimensionally printed part comprising three different continuously printed materials fabricated using methods described herein.
FIG. 3A is a photograph showing a cross-sectional view of a lattice structure fabricated using coreactive three-dimensional printing in which the part is flexible in one direction and rigid in the orthogonal direction.
FIG. 3B is a photograph showing a top view of the lattice structure shown in FIG. 3A.

### DETAILED DESCRIPTION

For purposes of the following detailed description, it is to be understood that embodiments provided by the present disclosure may assume various alternative variations and step sequences, except where expressly specified to the contrary. Moreover, other than in any operating examples, or where otherwise indicated, all numbers expressing, for example, quantities of ingredients used in the specification are to be understood as being modified in all instances by the term "about." Accordingly, unless indicated to the contrary, the numerical parameters set forth in the following specification are approximations that may vary depending upon the desired properties to be obtained. Each numerical parameter should at least be construed in light of the number of reported significant digits and by applying ordinary rounding techniques.

The numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

"Component" refers to a composition in which the constituents of the component are not coreactive until combined and mixed with another component to form a coreactive composition.

"Coreactive three-dimensional printing" refers to a method as disclosed herein in which a thermosetting composition is extruded through a nozzle in successive layers to form a part.

"Coreactive composition" refers to a composition comprising at least two reactive compounds capable of reacting with each other. The reactive compounds can react in the absence of a catalyst, in the presence of a catalyst, or in the presence of an activated cure initiator. A coreactive composition can be reactive at a temperature less than 50°C. A coreactive composition can be a thermosetting composition and when cured forms a thermoset.

"Catalyst" refers to a substance that increases the rat of a reaction without modifying the overall standard Gibbs energy change in the reaction.

"Cure initiator" refers to a compound that a compound that initiates a polymerization reaction following activation. A cure initiator can be activated, for example, upon exposure to actinic radiation, heat, or shear forces.

"Reactive compound" refers to a compound that is reactive with another compound. A reactive compound can comprise one or more functional groups that are reactive with functional groups of another compound.

"Constituent" refers to an organic compound or an inorganic compound. A composition and a component can comprise one or more constituents. Examples of constituents include prepolymers, monomers, polyfunctionalizing agents and additives as disclosed herein.

"Precursor composition" refers to a composition that can be combined with one or more additional precursor compositions to form a component.

"Volume mix ratio" refers to the volume ratio of two or more components.

"Continuously changing" refers to changing without interruption.

"Discontinuously changing" refers to changing in discrete steps.

"Thermoset" refers to a cured thermosetting polymer composition.

"Thermosetting composition" refers to a composition comprising coreactive compounds that change irreversibly into an infusible, insoluble polymer network by curing. Curing is the chemical process of converting a prepolymer and curing agents into a polymer of higher molecular weight and then into a polymer network. Curing results in chemical reactions that create extensive cross-linking between A polymer network is a highly ramified structure in which essentially each constitutional unit is connected to each other constitutional unit and to the macroscopic phase boundary by many paths through the structure, the number of such paths increasing with the average number of intervening constitutional units; the paths must on average co-extensive with the structure,

"Prepolymer backbone" refers to a segment between the reactive functional groups of the prepolymer. A prepolymer backbone typically includes repeating subunits. For example, the backbone of a polythiol having the structure HS-(R)ₙ-SH is -(R)ₙ-.

"Suitable activated cure initiator" refers to an activated cure initiator capable of initiating a curing reaction between a first reactive compound and a second reactive compound within the context of use. As an example, in the absence of a suitable catalyst, a thiol-functional prepolymer is coreactive with an alkenyl-functional monomer in the presence of an activated free radical generator.

"Suitable catalyst" refers to a compound capable of catalyzing the reaction between a first reactive compound and a second reactive compound within the context of use. For example, a thiol-functional prepolymer and an alkenyl-functional monomer are coreactive in the presence of an amine catalyst.

Electrical properties of a polymer composite can be determined using a suitable test method such as ASTM D257-14, ASTM D4496-04, ASTM D991-89(2005) or IEC 60093.

Coreactive three-dimensional printing can be used to fabricate parts having a wide range of properties. Coreactive three-dimensional printing facilitates the use of a different curing chemistries to control the rate of reaction and can facilitate the use of a wide range of polymeric materials. Coreactive three-dimensional printing can be adapted to continuously change the coreactive composition and/or the dimensions of layers during deposition. The versatility of coreactive three-dimensional printing can be adapted to rapidly and cost effectively fabricate both small and large parts in small and large volume production.

Methods of fabricating a part using three-dimensional printing described herein include: combining and mixing a first component and a second component to form a coreactive composition, wherein the first component comprises a first compound and the second component comprises a second compound, wherein the first reactive compound is reactive with the second reactive compound at a temperature less than 50°C; or the first component comprises a first reactive compound and a second reactive compound, wherein the first reactive compound is reactive with the second reactive compound in the presence of a catalyst and/or a cure initiator, where the catalyst and/or cure initiator is capable of catalyzing and/or initiating a reaction between the first reactive compound and the second reactive compound, and the second component comprises the catalyst and/or the cure initiator; and depositing the coreactive composition in successive layers using three-dimensional printing to fabricate a part.

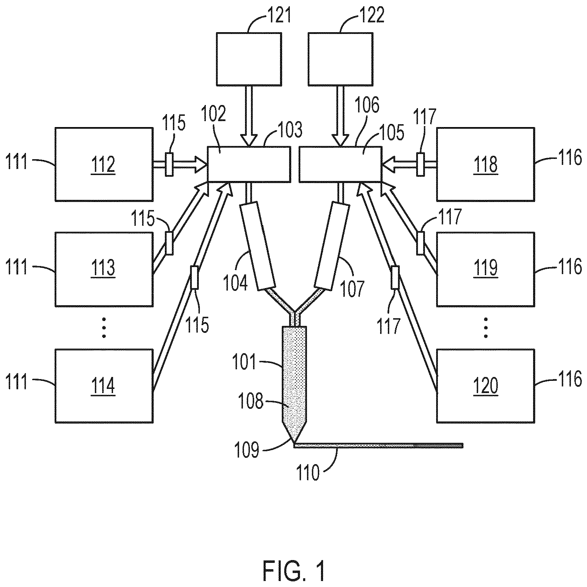

A schematic of an example of a three-dimensional printing apparatus for use with coreactive compositions as claimed herein is shown in FIG. 1.

The apparatus shown in FIG. 1 includes a mixing nozzle 101. A first component 102 in a first primary reservoir 103 is pumped into mixing nozzle 101 using primary pump 104. A second component 105 in a second primary reservoir 106 is pumped into mixing nozzle 101 using primary pump 107. The first component 102 and the second component 105 are combined and mixed in the mixer 101 to provide a coreactive composition 108. The coreactive composition 108 is extruded under pressure provided by primary pumps 104/107 through nozzle 109 to form an extrudate 110. As the coreactive composition 108 in the form of an extrudate 110 begins to cure, it can be deposited in successive layers to fabricate a part.

Primary pumps 104/107 can be independently controlled by a controller (not shown) to provide a desired volume mix ratio of the first component and the second component. The volume mix ratio can be constant during fabrication of the part. The volume mix ratio can be changed continuously for a period of time while the part is being fabricated and/or can be changed discontinuously while the part is being fabricated. By changing the mix ratio of the first component and the second component, different coreactive compositions can be produced and deposited, resulting in the cured part having different properties in different portions of the three dimensionally printed part.

Although not shown, one or more additional components can be introduced into the mixer in addition to the first and second components or instead of the first and/or second components. The one or more additional components can be introduced into the mixer using respective primary pumps coupled to respective primary reservoirs independently containing the one or more additional components.

A component such a first component 102 and second component 105 can have a consistent composition during fabrication of a part. Alternatively, the composition of a component can be changed during fabrication of a part. For example, the amounts and/or types of one or more constituents of a composition can change while a part is being fabricated. As shown in FIG. 1, this is accomplished by coupling two or more secondary reservoirs to respective primary reservoir 103/106 through respective independently-controlled secondary pumps, where each of the secondary reservoirs contains a separate precursor composition. Referring to FIG. 1, secondary reservoirs 111 are coupled to primary reservoir 103 through respective secondary pumps and each of the secondary reservoirs 111 can contain a separate precursor composition 112/113/114. Similarly, secondary reservoirs 116 are coupled to primary reservoir 106 through respective independently-controlled secondary pumps 117 and each of the secondary reservoirs can contain a separate precursor composition 118/119/120. The volume mix ratio of the precursor compositions can be adjusted continuously and/or discontinuously to change the composition of the first and/or second components in the primary reservoirs.

Each primary pump and secondary pump can be independently controlled and includes suitable associated metering apparatus.

Purges 121/122 can be coupled to respective primary reservoirs 103 and 106 and can be used to evacuate the primary reservoirs and clean the system at any time during the printing process.

A shear-thinning device such as a helical mixer can be incorporated into the mixing nozzle between the mixer and the nozzle tip. A shear-thinning device can be used to reduce the viscosity of a shear-thinning material in the coreactive composition before being extruded.

This design for multicomponent extrusion can facilitate seamless three-dimensional printing of multi-material parts. This design avoids the use of multiple extrusion nozzles. By varying the amounts and nature of the constituents of the coreactive composition, either continuously or discontinuously, a printed part can comprise graded and/or distinct regions exhibiting different mechanical and aesthetic properties.

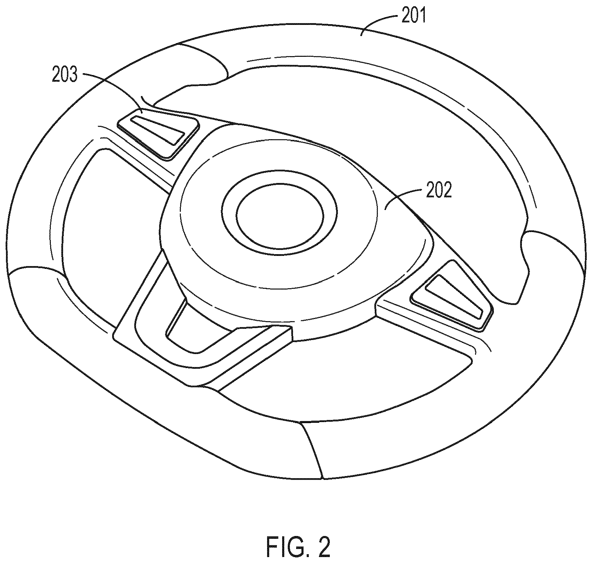

An illustration of a part fabricated using coreactive three-dimensional printing methods described herein and apparatus claimed is shown in FIG. 2. FIG. 2 shows a part having three distinct regions 201/202/203 comprising three different materials. The part can be fabricated by continuously printing and changing the coreactive composition to print the different portions of the part. In this example, a first material can comprise a foam material 201, a second material can be a flexible material 202, and third material can be a rigid material 203, where the materials having different properties are used to fabricate different portions of the part. The part can be fabricated without lifting the extrusion nozzle and without changing out the coreactive composition. The constituents of the coreactive composition can be changed by adjusting the volume mix ratio of a first component and the second component, and/or by incorporating a third component into the first and second component, or by changing to a different coreactive composition, while different portions of the part are being fabricated.

Methods described herein include three-dimensional printing of multi-material parts by extruding a varying coreactive composition through one or more nozzles to fabricate a part having different properties in different regions of the part.

A coreactive composition can comprise a first reactive compound and a second reactive compound where the first reactive compound is reactive with the second reactive compound at a temperature, for example, less than 50°C, less than 40°C, less than 30°C, less than 25°C, less than 20°C, or less than 15°C.

A coreactive composition can comprise coreactive compounds that coreact and cure at room temperature, where room temperature refers to a temperature from 20°C to 25°C, from 20°C to 22°C, or about 20°C.

The first and second compounds can be reactive in the absence of a catalyst or a cure initiator.

The first and second compounds can be reactive in the presence of a catalyst capable of catalyzing the reaction of the first and second compounds.

The first and second compounds can be reactive upon activation of a cure initiator. For example, a coreactive composition can include coreactive compounds capable of reacting by a free radical photopolymerization mechanism and the coreactive composition can cure when a photoinitiator is activate upon exposure to actinic radiation.

Coreactive compositions are thermosetting compositions and when cured form thermosets.

A coreactive composition can be substantially free of solvent. For example, a coreactive composition can comprise less than 5 wt% solvent, less than 2 wt%, less than 1 wt%, or less than 0.1 wt% solvent, where wt% is based on the total weight of the coreactive composition.

Coreactive compositions can comprise reactive prepolymers, reactive monomers, and additives.

A coreactive composition can comprise a prepolymer or combination of prepolymers having suitable functional groups. The functional groups can be reactive with functional groups of another prepolymer and/or with functional groups of a monomer.

A coreactive composition can comprise a prepolymer or combination of prepolymers. Prepolymers can determine properties of the cured composition such as, for example, the tensile strength, %elongation, impact strength, thermal resistance, hydrolytic stability, and chemical resistance of the cured polymer.

A prepolymer can have a number average molecular weight, for example, less than 10,000 Da, less than 8,000 Da, less than 6,000 Da, less than 4,000 Da, or less than 2,000 Da. A prepolymer can have a number average molecular weight, for example, greater than 2,000 Da, greater than 4,000 Da, greater than 6,000 Da, or greater than 8,000 Da. A prepolymer can have a number average molecular weight, for example, from 2,000 Da to 10,000 Da, from 3,000 Da to 9,000 Da, from 4,000 Da to 8,000 Da, or from 5,000 Da to 7,000 Da.

Prepolymers can be liquid at 25°C and can have a glass transition temperature T_{g}, for example, less than -20°C, less than -30°C, or less than -40°C, where the glass transition temperature T_{g} is determined by Dynamic Mass Analysis (DMA) using a TA Instruments Q800 apparatus with a frequency of 1 Hz, an amplitude of 20 microns, and a temperature ramp of -80°C to 25°C, with the T_{g} identified as the peak of the tan δ curve.

Prepolymers can exhibit a viscosity, for example, within a range from 20 poise to 500 poise (2 Pa-sec to 50 Pa-sec), from 20 poise to 200 poise (2 Pa-sec to 20 Pa-sec) or from 40 poise to 120 poise (4 Pa-sec to 12 Pa-sec), measured using a Brookfield CAP 2000 viscometer, with a No. 6 spindle, at speed of 300 rpm, and a temperature of 25°C.

A prepolymer can have a reactive functionality, for example, less than 12, less than 10, less than 8, less than 6, or less than 4. Each of the first compound and the second compound can comprise a respective reactive functionality, for example, from 2 to 12, from 2 to 8, from 2 to 6, from 2 to 4, or from 2 to 3. Each of the first compound and the second compound can independently have a functionality, for example, of 2, 3, 4, 5, 6, 7, 8, 9, 10, 11, or 12.

A prepolymer can comprises any suitable backbone. A prepolymer backbone can be selected, for example, based on the end use requirements of a vehicle part. For example, a prepolymer backbone can be selected based considerations of tensile strength, %elongation, thermal resistance, chemical resistance, low temperature flexibility, hardness, and a combination of any of the foregoing. The selection of a prepolymer for use in a particular prepolymer can also be based on cost considerations.

Prepolymers can include copolymers such as alternating copolymers, random copolymers, and/or block copolymers. For example, prepolymers can comprise segments that impart desired properties to a prepolymer backbone such as flexibility.

A prepolymer can comprise segments having different chemical structure and properties within the prepolymer backbone. The segments can be distributed randomly, in a regular distribution, or in blocks. The segments can be used to impart certain properties to the prepolymer backbone. For example, the segments can comprise flexible linkages such as thioether linkages into the polymer backbone. Segments having pendent groups can be incorporated into the prepolymer backbone to disrupt the symmetry of the prepolymer backbone. The segments can be introduced via the reactants used to prepare a sulfur-containing prepolymer and/or the lower molecular weight sulfur-containing prepolymers can be reacted with compounds containing the segments.

A prepolymer comprises a prepolymer backbone that can be terminated in suitable functional groups as appropriate for a particular curing chemistry.

A prepolymer can have any suitable backbone as appropriate for desired cured properties.

For example, a prepolymer backbone can comprise a polythioether, a polysulfide, a polyformal, a polyisocyanate, a polyurea, polycarbonate, polyphenylene sulfide, polyethylene oxide, polystyrene, acrylonitrile-butadiene-styrene, polycarbonate, styrene acrylonitrile, poly(methylmethacrylate), polyvinylchloride, polybutadiene, polybutylene terephthalate, poly(p-phenyleneoxide), polysulfone, polyethersulfone, polyethylenimine, polyphenylsulfone, acrylonitrile styrene acrylate, polyethylene, syndiotactic or isotactic polypropylene, polylactic acid, polyamide, ethylene-vinyl acetate homopolymer or copolymer, polyurethane, copolymers of ethylene, copolymers of propylene, impact copolymers of propylene, polyetheretherketone, polyoxymethylene, syndiotactic polystyrene (SPS), polyphenylene sulfide (PPS), liquid crystalline polymer (LCP), homo- and copolymer of butene, homo- and copolymers of hexene; and combinations of any of the foregoing.

Examples of other suitable prepolymer backbones include polyolefins (such as polyethylene, linear low density polyethylene (LLDPE), low density polyethylene (LDPE), high density polyethylene, polypropylene, and olefin copolymers), styrene/butadiene rubbers (SBR), styrene/ethylene/butadiene/styrene copolymers (SEBS), butyl rubbers, ethylene/propylene copolymers (EPR), ethylene/propylene/diene monomer copolymers (EPDM), polystyrene (including high impact polystyrene), poly(vinyl acetates), ethylene/vinyl acetate copolymers (EVA), poly(vinyl alcohols), ethylene/vinyl alcohol copolymers (EVOH), poly(vinyl butyral), poly(methyl methacrylate) and other acrylate polymers and copolymers (including such as methyl methacrylate polymers, methacrylate copolymers, polymers derived from one or more acrylates, methacrylates, ethyl acrylates, ethyl methacrylates, butyl acrylates, butyl methacrylates and the like), olefin and styrene copolymers, acrylonitrile/butadiene/styrene (ABS), styrene/acrylonitrile polymers (SAN), styrene/maleic anhydride copolymers, isobutylene/maleic anhydride copolymers, ethylene/acrylic acid copolymers, poly(acrylonitrile), polycarbonates (PC), polyamides, polyesters, liquid crystalline polymers (LCPs), poly(lactic acid), poly(phenylene oxide) (PPO), PPO-polyamide alloys, polysulfone (PSU), polyetherketone (PEK), polyetheretherketone (PEEK), polyimides, polyoxymethylene (POM) homo- and copolymers, polyetherimides, fluorinated ethylene propylene polymers (FEP), poly(vinyl fluoride), poly(vinylidene fluoride), poly(vinylidene chloride), and poly(vinyl chloride), polyurethanes (thermoplastic and thermosetting), aramides (such as Kevlar^{®} and Nomex^{®}), polytetrafluoroethylene (PTFE), polysiloxanes (including polydimethylenesiloxane, dimethylsiloxane/vinylmethylsiloxane copolymers, vinyldimethylsiloxane terminated poly(dimethylsiloxane)), elastomers, epoxy polymers, polyureas, alkyds, cellulosic polymers (such as ethyl cellulose, ethyl hydroxyethyl cellulose, carboxymethyl cellulose, cellulose acetate, cellulose acetate propionates, and cellulose acetate butyrates), polyethers and glycols such as poly(ethylene oxide)s (also known as poly(ethylene glycol)s, poly(propylene oxide)s (also known as poly(propylene glycol)s, and ethylene oxide/propylene oxide copolymers, acrylic latex polymers, polyester acrylate oligomers and polymers, polyester diol diacrylate polymers, and UV-curable resins.

Prepolymers having an elastomeric backbone can also be used. Examples of suitable prepolymers having n elastomeric backbone include polyethers, polybutadienes, fluoroelastomers, perfluoroelastomers, ethylene/acrylic copolymers, ethylene propylene diene terpolymers, nitriles, polythiolamines, polysiloxanes, and combinations of any of the foregoing.

An elastomeric prepolymer can comprise any suitable elastomeric prepolymer. Examples of suitable prepolymers having an elastomeric backbone include polyethers, polybutadienes, fluoroelastomers, perfluoroelastomers, ethylene/acrylic copolymers, ethylene propylene diene terpolymers, nitriles, polythiolamines, polysiloxanes, chlorosulfonated polyethylene rubbers, isoprenes, neoprenes, polysulfides, polythioethers, silicones, styrene butadienes, and combinations of any of the foregoing. The elastomeric prepolymer can comprise a polysiloxane, such as, for example, a polymethylhydrosiloxane, polydimethylsiloxane, polyethylhydrosiloxane, polydiethylsiloxane, or a combination of any of the foregoing. The elastomeric prepolymer can comprise terminal functional groups that have a low reactivity with amine and isocyanate groups such as silanol groups. The elastomeric prepolymer can comprise, for example, a polydimethylsiloxane prepolymer, such as a silanol-terminal polysiloxane prepolymer, such as a silanol-terminated polydimethylsiloxane prepolymer.

Examples of prepolymers having a chemically resistant backbone include polytetrafluorethylene, polyvinylidene difluoride, polyethylenetetrafluoroethylene, fluorinated ethylene propylene, perfluoroalkoxy, ethylene chlorotrifluorethylene, polychlorotrifluoroethylene, fluorinated ethylene propylene polymers polyamide, polyethylene, polypropylene, ethylene-propylene, fluorinated ethylene-propylene, polysulfone, polyarylether sulfone, polyether sulfone, polyimide, polyethylene terephthalate, polyetherketone, polyetherether ketone, polyetherimide, polyphenylene sulfide, polyarylsulfone, polybenzimidazole, polyamideimide, liquid crystal polymers, and combinations of any of the foregoing.

For parts where chemical resistance is required, prepolymers having a sulfur-containing backbone can be used. The chemical resistance can be with respect to cleaning solvents, fuels, hydraulic fluids, lubricants, oils, and/or salt spray. Chemical resistance refers to the ability of a part to maintain acceptable physical and mechanical properties following exposure to atmospheric conditions such as moisture and temperature and following exposure to chemicals such as cleaning solvents, fuels, hydraulic fluid, lubricants, and/or oils. In general, a chemically resistant part has exhibits a % swell less than 25%, less than 20%, less than 15%, or less than 10%, following immersion in a chemical for 7 days at 70°C, where % swell is determined according to EN ISO 10563.

Examples of prepolymers having a sulfur-containing backbone include polythioethers, polysulfides, sulfur-containing polyformals, monosulfides, or a combination of any of the foregoing.

Prepolymer backbones that exhibit chemical resistance can have a high sulfur content. For example, a sulfur-containing prepolymer backbone can have a sulfur content greater than 10 wt%, greater than 12 wt%, greater than 15 wt%, greater than 18 wt%, greater than 20 wt%, or greater than 25 wt%, where wt% is based on the total weight of the prepolymer backbone. A chemically resistant prepolymer backbone can have a sulfur content, for example, from 10 wt % to 25 wt %, from 12 wt % to 23 wt %, from 13 wt % to 20 wt %, or from 14 wt % to 18 wt %, where wt% is based on the total weight of the prepolymer backbone.

A coreactive composition can comprise a reactive monomer or a combination of reactive monomers.

A coreactive monomer can comprise functional groups reactive with a prepolymer and/or another monomer.

A reactive monomer can have a molecular weight, for example, less than 1,000 Da, less than 800 Da less than 600 Da, less than 500 Da, less than 400 Da, or less than 300 Da. A monomer can have a molecular weight, for example, from 100 Da to 1,000 Da, from 100 Da to 800 Da, from 100 Da to 600 Da, from 150 Da, to 550 Da, or from 200 Da to 500 Da. A monomer can have a molecular weight greater than 100 Da, greater than 200 Da, greater than 300 Da, greater than 400 Da, greater than 500 Da, greater than 600 Da, or greater than 800 Da.

A reactive monomer can have a reactive functionality of two or more, for example, from 2 to 6, from 2 to 5, or from 2 to 4. A reactive monomer can have a functionality of 2, 3, 4, 5, or 6. A reactive monomer can have an average reactive functionality, for example, from 2 to 6, from 2 to 5, from 2 to 4, from 2 to 3, from 2.1 to 2.8, or from 2.2 to 2.6.

A reactive monomer can comprise any suitable functional group such as, for example, a thiol, alkenyl, alkynyl, epoxy, isocyanate, Michael acceptor, Michael donor, hydroxyl, amine, silanol, polyalkoxysilyl, or other suitable reactive functional group.

A reactive monomer can comprise, for example, a polythiol, a polyalkenyl, a polyalkynyl, a polyepoxide, a polyfunctional Michael acceptor, a polyfunctional Michael donor, a polyisocyanate, a polyol, a polyamine, a polyfunctional silanol, a polyfunctional polyalkoxysilyl, or a combination of any of the foregoing.

A reactive monomer can comprise a polyfunctionalizing agent or a combination of polyfunctionalizing agents.

Polyfunctionalizing agents can have a functionality of three or more functional groups that can be included in a composition to increase the cross-linking density of a cured polymer matrix. A polyfunctionalizing agent can comprise functional groups reactive with reactive prepolymers and/or reactive monomers.

A polyfunctionalizing agent can comprise an average functionality, for example, from 3 to 6, such as from 3 to 5, or from 3 to 4. A polyfunctionalizing agent can have a functionality of 3, 4, 5, 6, or a combination of any of the foregoing.

A polyfunctionalizing agent can comprise, for example, a polythiol, a polyalkenyl, a polyalkynyl, a polyepoxide, a polyfunctional Michael acceptor, a polyfunctional Michael donor, a polyisocyanate, a polyol, a polyamine, a polyfunctional silanol, a polyfunctional polyalkoxysilyl, or a combination of any of the foregoing.

A reactive compound such as a reactive prepolymer and a reactive monomer can comprise one or more reactive functional groups, such as two or more reactive functional groups.

In a coreactive composition, a first coreactive compound can comprise one or more first functional groups, and a second coreactive compound can comprise one or more second functional groups where each of the one or more first functional groups is reactive with each of the one or more second functional groups. Each of the one or more first functional groups can be the same or at least some of the first functional groups can be different than other first functional groups. Each of the one or more second functional groups can be the same or at least some of the second functional groups can be different than other second functional groups.

A coreactive composition can comprise at least one third coreactive compound wherein the at least one third coreactive compound can comprise one or more third functional groups such as two or more third functional groups. Each of the one or more third functional groups can be the same or at least some of the third functional groups can be different than other third functional groups. Each of the one or more third functional groups can be reactive with each of the one or more first functional groups, each of the one or more third functional groups can be reactive with each of the one or more second functional groups, each of the one or more third functional groups can be reactive with each of the one or more first functional groups and each of the one or more second functional groups, or at least one of the one or more third functional groups can be reactive with at least one of the one or more first functional groups and at least one of the one or more third functional groups is reactive with at least one of the one or more second functional groups.

For example, a first functional group can be a thiol group, and a second functional group can be a thiol group, an alkenyl group, an alkynyl group, an epoxy group, a Michael acceptor group, an isocyanate group, or a combination of any of the foregoing. These curing chemistries can be adapted to provide a balance between a long pot life or useful working time and a fast cure rate.

Automated methods of applying a coreactive composition can facilitate the use with other curing chemistries, such as fast curing chemistries.

A fast curing chemistry refers to a chemistry in which the coreactive compounds have a gel time less than 5 minutes, less than 4 minutes, less than 3 minutes, less than 2 minutes, less than 1 minute, less than 45 seconds, less than 30 seconds, less than 15 seconds, or less than 5 seconds. Coreactive compounds can have a gel time, for example, from 0.1 seconds to 5 minutes, from 0.2 seconds to 3 minutes, from 0.5 seconds to 2 minutes, from 1 second to 1 minute, or from 2 seconds to 40 seconds. Gel time is the time following mixing the coreactive compounds to when the coreactive compounds are no longer stirrable by hand.

Examples of useful fast curing chemistries include hydroxyl/isocyanate, amine/isocyanate, epoxy/epoxy, and Michael acceptor/Michael acceptor reactions.

Thus, a first functional group can comprise an isocyanate and a second functional group can comprise a hydroxyl group, an amine group, or a combination thereof.

A first functional group can comprise an epoxy group and a second functional group can comprise an epoxy group.

A first functional group can comprise a Michael acceptor group and a second functional group can comprise a Michael acceptor group.

A first functional group can be a saturated functional group and the second functional group can be an unsaturated group. Each of the first functional group and the second functional can comprise a saturated functional group. Each of the first functional group and the second functional can comprise an unsaturated functional group. A saturated functional group refers to a functional group not having a reactive double bond. Examples of saturated functional groups include thiol, hydroxyl, primary amine, secondary amine, and epoxy groups. An unsaturated functional group refers to a group having a reactive double bond. Examples of unsaturated functional groups include alkenyl groups, Michael acceptor groups, isocyanate groups, acyclic carbonate groups, acetoacetate groups, carboxylic acid groups, vinyl ether groups, (meth)acrylate groups, and malonate groups.

The first functional group can be a carboxylic acid group and the second functional group can be an epoxy group.

The first functional group can be a Michael acceptor group such as a (meth)acrylate group, a maleic group, or a fumaric group, and the second functional group can be a primary amine group or a secondary amine group.

The first functional group can be an isocyanate group and the second functional group can be a primary amine group, a secondary amine group, a hydroxyl group, or a thiol group.

The first functional group can be a cyclic carbonate group, an acetoacetate group, or an epoxy group; and the second functional group can be a primary amine group, or a secondary amine group.

The first functional group can be a thiol group, and the second functional group can be an alkenyl group, a vinyl ether group, or a (meth)acrylate group.

The first functional group can be a Michael acceptor group such as (meth)acrylate group, a cyanoacrylate, a vinylether a vinylpyridine, or an α,β-unsaturated carbonyl group and the second functional group can be a malonate group, an acetylacetonate, a nitroalkane, or other active alkenyl group.

The first functional group can be a thiol group, and the second functional group can be an alkenyl group, an epoxy group, an isocyanate group, an alkynyl group, or a Michael acceptor group.

The first functional group can be a Michael donor group, and the second functional group can be a Michael acceptor group.

Both the first functional group and the second functional group can be thiol groups.

Both the first functional group and the second functional group can be alkenyl groups.

Both the first functional group and the second functional group can be Michael acceptor groups such as (meth)acrylate groups.

A first functional group can be an amine and a second functional group can be selected from an epoxy group, an isocyanate group, an acrylonitrile, a carboxylic acid including esters and anhydrides, an aldehyde, or a ketone.

Suitable coreactive functional groups are described, for example, in Noomen, Proceedings of the XIIIth International Conference in Organic Coatings Science and Technology, Athens, 1987, page 251; and in Tillet et al., Progress in Polymer Science, 36 (2011), 191-217.

Functional groups can be selected to coreact, for example, at temperatures less than 60°C, less than 50°C, less than 40°C, less than 30°C, or less than 20°C. Functional groups can be selected to coreact, for example, at temperatures greater than 20°C, greater than 30°C, greater than 40°C, or greater than 50°C. Functional groups can be selected to coreact, for example, at temperatures from 20°C to 25°C, from 20°C to 30°C, from 20°C, to 40°C, or from 20°C to 50°C.

The cure rate for any of these coreactive chemistries can be modified by including an appropriate catalyst or combination of catalysts in a coreactive composition.

A monomer, oligomer, or prepolymer can be modified to comprise a suitable terminal reactive group. For example, a commercially available monomer, oligomer, or prepolymer can be reacted with a compound comprising as desired reactive functional group and a group reactive with the monomer, oligomer, or prepolymer to provide a coreactive compound having a suitable reactive functional group.

A coreactive composition is a thermosetting composition, meaning that when cured to form a thermoset, the cured thermoset composition does not exhibit a melt temperature or crystallization temperature. A thermoplastic material will exhibit a melt temperature and a crystallization temperature.

When extruded from the nozzle of a three-dimensional printing apparatus, a coreactive composition can have a viscosity, for example, from 200 mPa·s [cP] to 500,000,000 mPa·s [cP], from 200 mPa·s [cP] to 250,000,000 mPa·s [cP], from 200 mPa·s [cP] to 100,000,000 mPa·s [cP], from 200 mPa·s [cP] to 50,000,000 mPa·s [cP], or from 200 mPa·s [cP] to 10,000,000 mPa·s [cP] measured using an Anton Paar MCR 302 rheometer with a 25 mm-diameter parallel plate spindle, an oscillation frequency of 1 Hz and amplitude of 0.3%, and with a rheometer plate temperature of 25°C. A coreactive composition can have an as-extruded viscosity, for example, greater than 200 mPa·s [cP], greater than 1,000 mPa·s [cP], greater than 10,000 mPa·s [cP], greater than 100,000 mPa·s [cP], greater than 1,000,000 mPa·s [cP], greater than 10,000,000 mPa·s [cP], or greater than 100,000,000 mPa·s [cP], measured using an Anton Paar MCR 302 rheometer with a 25 mm-diameter parallel plate spindle, an oscillation frequency of 1 Hz and amplitude of 0.3%, and with a rheometer plate temperature of 25°C. A coreactive composition can have an as-extruded viscosity, for example, less than 500,000,000 less than 250,000,000 mPa·s [cP], less than 100,000,000 mPa·s [cP], less than 10,000,000 mPa·s [cP], less than 1,000,000 mPa·s [cP], less than 100,000 mPa·s [cP], less than 10,000 mPa·s [cP], or less than 1,000 mPa·s [cP], measured using an Anton Paar MCR 302 rheometer with a 25 mm-diameter parallel plate spindle, an oscillation frequency of 1 Hz and amplitude of 0.3%, and with a rheometer plate temperature of 25°C.

A coreactive composition can have a fast gel time, for example, less than 5 minutes, less than 4 minutes, less than 3 minutes, less than 2 minutes, less than 1 minute, less than 45 seconds, less than 30 seconds, less than 15 seconds, or less than 5 seconds. A coreactive composition can have a fast gel time, for example, from 0.1 seconds to 5 minutes, from 0.2 seconds to 3 minutes, from 0.5 seconds to 2 minutes, from 1 second to 1 minute, or from 2 seconds to 40 seconds. Gel time refers to the time following mixing of the coreactive components to when the coreactive composition is no longer stirrable by hand.

A coreactive composition can have an intermediate gel time, for example, form 5 minutes to 60 minutes, such as from 10 minutes to 40 minutes, or from 20 minutes to 30 minutes.

A coreactive composition can have a long gel time, for example, of greater than 60 minutes, greater than 2 hours, greater than 4 hours, greater than 6 hours, or greater than 12 hours.

A coreactive composition can have a tack free time, for example, of less than 2 minutes, less than 4 minutes, less than 6 minutes, less than 8 minutes, less than 10 minutes, less than 20 minutes, or less than 30 minutes.

A coreactive composition can have a time to a hardness of Shore 10A, for example, of less than 2 minutes, less than 4 minutes, less than 6 minutes, less than 8 minutes, less than 10 minutes, less than 20 minutes, less than 30 minutes, less than 1 hour, less than 5 hours, or less than 10 hours. A coreactive composition can have a time to a hardness of Shore 10A, for example, of greater than 2 minutes, greater than 30 minutes, greater than 1 hour, or greater than 5 hours. A coreactive composition can have a time to a hardness of Shore 10A, for example, of from 2 minutes to 10 hours, from 5 minutes to 5 hours, or from 30 minutes to 3 hours.

The properties of a coreactive composition can be selected such that a deposited coreactive composition maintains an intended shape when deposited. For example, a coreactive composition can having a high viscosity and/or a slow cure rate and maintain an intended deposited shape, and a low viscosity coreactive composition can have a fast cure rate and/or fast gel time and maintain an intended deposited shape.

The properties of a coreactive composition can be selected to be compatible with the mechanical properties of the three-dimensional printing apparatus used to combine, mix, and extrude the coreactive composition. For example, for a coreactive composition having a high viscosity, higher pressure pumps and more robust mixer and nozzles will be appropriate.

A coreactive composition for forming a portion of a part that exhibits low temperature flexibility can comprise, for example, prepolymers having a low glass transition temperature.

A coreactive composition for forming a portion of a part that exhibits low %swell can comprise, for example, a high cross-linking density.

A coreactive composition for forming a portion of a part that exhibits hydrolytic stability can comprise, for example, prepolymers such as silicones, polytetrafluoroethylenes, polythioethers, polysulfides, polyformals, polybutadienes, certain elastomer, and combinations of any of the foregoing, and compositions having a high crosslinking density.

A coreactive composition for forming a portion of a part that exhibits high temperature resistance can comprise, for example, prepolymers such as silicones, polytetrafluoroethylenes, polythioethers, polysulfides, polyformals, polybutadienes, certain elastomer, and combinations of any of the foregoing, and compositions having a high crosslinking density.

A coreactive composition for forming a portion of a part that exhibits a high tensile strength can comprise, for example, elastomeric prepolymers such a silicones and polybutadiene, compositions having high crosslinking density, inorganic filler, and combinations of any of the foregoing.

A coreactive composition for forming a portion of a part that exhibits a high %elongation can comprise, for example, elastomeric prepolymers such a silicones and polybutadiene, compositions having high crosslinking density, inorganic filler, and combinations of any of the foregoing.

A coreactive composition for forming a portion of a part that exhibits substrate bonding or bonding to a primer coating can comprise, for example, adhesion promoters such as organo-functional alkoxysilanes, phenolic resins, cooked phenolic resins, and combinations of any of the foregoing, titanates, partially hydrolyzed alkoxysilanes, or combinations thereof.

A coreactive composition for forming a portion of a part that exhibits interlayer adhesion can comprise, for example, adhesion promoters, unreacted functional groups that are reactive with compounds in the adjoining layer, and combinations thereof.

A coreactive composition that exhibits a fast tack free time can comprise, for example, coreactants having a fast cure chemistry, systems curable by actinic radiation, catalysts, and combinations of any of the foregoing.

A coreactive composition that exhibits a fast time to a hardness of Shore 10A can comprise, for example, coreactants having a fast cure chemistry, systems curable by actinic radiation, catalysts, and combinations of any of the foregoing.

A coreactive composition for forming a portion of a part that exhibits electrical conductivity, EMI/RFI shielding, and/or static dissipation can comprise, for example, electrically conductive filler or a combination of electrically conductive filler.

A coreactive composition can be prepared by combining and mixing a first component a second component. The coreactive composition can comprise a first compound capable of reacting with a second compound in the absence or in the presence of a catalyst and/or cure initiator.

A component such as a first component or a second component can comprise two coreactive compounds, one or more reactive compounds, or no reactive compounds. For example, a component can comprise two coreactive compounds that do not react unless combined with a suitable catalyst or combined with an activated photoinitiator. As another example, a component can comprise one or more reactive compounds that are not coreactive with each other but are reactive with reactive compounds in another component. As another example, a component may not contain any reactive components but can instead include catalysts, cure initiators, and additives.

A coreactive composition can be prepared by combining and mixing a first component comprising a first reactive compound and a second component comprising a second reactive compound where the first reactive compound is reactive with the second reactive compound. The first and second components independently may or may not include a suitable catalyst and/or cure initiator. The reaction between the first and second reactive compounds can take place at a temperature less than 50°C, less than 40°C, less than 30°C, less than 25°C, less than 20°C, or less than 15°C. The reaction can take place in the absence of a catalyst or a cure initiator. The reaction can take place in the presence of a suitable catalyst and/or a suitable activated cure initiator. For example, neither the first component nor the second component, both the first component or the second component, or one of the first component or the second component can comprise a suitable catalyst or suitable cure initiator.

A coreactive composition can be prepared by combining and mixing a first component comprising a first reactive compound and a second reactive compound wherein the first and second reactive compounds are not coreactive at temperatures less than 50°C unless combined with a catalyst or an activated cure initiator, and a second component comprising a suitable catalyst or suitable cure initiator.

A first component and/or a second component can comprise a suitable catalyst and/or a suitable cure initiator.

A coreactive composition can include a catalyst or a combination of catalysts.

A catalyst or combination of catalysts can be selected to catalyze the reaction of co-reactants in the coreactive composition such as the reaction of the first compound and the second compound. The appropriate catalyst will depend on the curing chemistry. For example, a thiol/ene or thiol/epoxy can comprise an amine catalyst.

A catalyst can include a latent catalyst or combination of latent catalysts. Latent catalysts include catalysts that have little or no activity until released or activated, for example, by physical and/or chemical mechanisms. Latent catalysts may be contained within a structure or may be chemically blocked. A controlled release catalyst may release a catalyst upon exposure to ultraviolet radiation, heat, ultrasonication, or moisture. A latent catalyst can be sequestered within a core-shell structure or trapped within a matrix of a crystalline or semi-crystalline polymer where the catalyst can diffuse from the encapsulant with time or upon activation such as by the application of thermal or mechanical energy.

A coreactive composition comprising a latent catalyst can be referred to as a latent coreactive composition. A latent catalyst can be activated by exposing a latent coreactive composition, for example, to energy such as actinic radiation, thermal energy, and/or mechanical energy such as shear force.

A coreactive composition can comprise a dark cure catalyst or a combination of dark cure catalysts. A dark cure catalyst refers to a catalyst capable of generating free radicals without being exposed to electromagnetic energy. Dark cure catalysts include, for example, combinations of metal complexes and organic peroxides, trialkylborane complexes, and peroxide-amine redox initiators. A dark cure catalyst can be used in conjunction with a photopolymerization initiator or independent of a photopolymerization initiator.

A coreactive composition based on thiol/thiol curing chemistries can comprise a cure activator or a combination of cure activators to initiate the thiol/thiol polymerization reaction. Cure activators can be used for example in compositions in which both the first compound and the second compound comprise thiol-terminated sulfur-containing prepolymers, such as thiol-terminated polysulfide prepolymers.

A cure activator can comprise an oxidizing agent capable of oxidizing terminal mercaptan groups to form disulfide bonds. Examples of suitable oxidizing agents include lead dioxide, manganese dioxide, calcium dioxide, sodium perborate monohydrate, calcium peroxide, zinc peroxide, and dichromate.

A cure activator can comprise an inorganic activator such as a metal oxide, an organic activator, or a combination thereof.

A coreactive composition based on thiol/thiol curing chemistries can include a cure accelerator or combination of cure accelerators. Cure accelerators can act as sulfur donors to generate active sulfur fragments capable of reacting with the terminal thiol groups of a thiol-terminated polysulfide prepolymer. Examples of suitable cure accelerators include thiazoles, thiurams, sulfenamides, guanidines, dithiocarbamates, xanthates, thioureas, aldehydeamines, and combinations of any of the foregoing.

A coreactive composition can comprise one or more free radial initiators such as thermally-activated free radical initiators or free radical initiators activated by actinic radiation.

A coreactive composition can be curable by actinic radiation such as coreactive compositions based on thiol/ene and ene/ene curing chemistries. Coreactive compositions that are curable by visible or ultraviolet radiation can comprise a photopolymerization initiator or combination of photopolymerization initiators.

A coreactive composition can include a photoinitiator or combination of photoinitiators. A photoinitiator can be activated by actinic radiation that can apply energy effective in generating an initiating species from the photopolymerization initiator upon irradiation such as α.-rays, γ-rays, X-rays, ultraviolet (UV) light including UVA, UVA, and UVC spectra), visible light, blue light, infrared, near-infrared, or an electron beam. For example, a photoinitiator can be a UV photoinitiator.

Examples of suitable UV photoinitiators include α-hydroxyketones, benzophenone, α, α.-diethoxyacetophenone, 4,4-diethylaminobenzophenone, 2,2-dimethoxy-2-phenylacetophenone, 4-isopropylphenyl 2-hydroxy-2-propyl ketone, 1-hydroxycyclohexyl phenyl ketone, isoamyl p-dimethylaminobenzoate, methyl 4-dimethylaminobenzoate, methyl O-benzoylbenzoate, benzoin, benzoin ethyl ether, benzoin isopropyl ether, benzoin isobutyl ether, 2-hydroxy-2-methyl-1-phenylpropan-1-one, 2-isopropylthioxanthone, dibenzosuberone, 2,4,6-trimethylbenzoyldiphenylphosphine oxide, bisacyclophosphine oxide, benzophenone photoinitiators, oxime photoinitiators, phosphine oxide photoinitiators, and combinations of any of the foregoing.

A coreactive composition can comprise a thermally activated free radical initiator. A thermally activated free radical initiator can become active at elevated temperature, such as at a temperature greater than, for example, 25°C or greater than 40°C.

Examples of suitable thermally activated free radical initiators include organic peroxy compounds, azobis(organonitrile) compounds, N-acyloxyamine compounds, O-imino-isourea compounds, and combinations of any of the foregoing. Examples of suitable organic peroxy compounds, that may be used as thermal polymerization initiators include peroxymonocarbonate esters, such as tertiarybutylperoxy 2-ethylhexyl carbonate and tertiarybutylperoxy isopropyl carbonate; peroxyketals, such as 1,1-di-(tert-butyl peroxy)-3,3,5-trimethylcyclohexane; peroxydicarbonate esters, such as di(2-ethylhexyl)peroxydicarbonate, di(secondary butyl)peroxydicarbonate and diisopropylperoxydicarbonate; diacylperoxides such as 2,4-dichlorobenzoyl peroxide, isobutyryl peroxide, decanoyl peroxide, lauryl peroxide, propionyl peroxide, acetyl peroxide, benzoyl peroxide, and p-chlorobenzoyl peroxide; peroxyesters such as *tert-*butylperoxy pivalate, tert-butylperoxy octylate, and tert-butylperoxyisobutyrate; methylethylketone peroxide, acetylcyclohexane sulfonyl peroxide, and combinations of any of the foregoing. Other examples of suitable thermal polymerization initiators include 2,5-dimethyl-2,5-di(2-ethylhexanoylperoxy)hexane, and/or 1,1-bis(*tert*-butylperoxy)-3,3,5-trimethylcyclohexane. Examples of suitable azobis(organonitrile) compounds that may be used as thermal polymerization initiators include azobis(isobutyronitrile), 2,2'-azobis(2-methyl-butanenitrile), and/or azobis(2,4-dimethylvaleronitrile).

A coreactive composition a component can comprise one or more additives such as, for example, catalysts, polymerization initiators, adhesion promoters, reactive diluents, plasticizers, filler, colorants, photochromic agents, rheology modifiers, cure activators and accelerators, corrosion inhibitors, fire retardants, UV stabilizers, thermal stabilizers, rain erosion inhibitors, or a combination of any of the foregoing.

A coreactive composition can comprise an adhesion promoter or combination of adhesion promoters. Adhesion promoters can enhance the adhesion of a coreactive composition to an underlying substrate such as a metal, composite, polymeric, or a ceramic surface, or to a coating such as a primer coating or other coating layer. Adhesion promoters can enhance adhesion to filler and to other layers of a vehicle part.

An adhesion promoter can include a phenolic adhesion promoter, a combination of phenolic adhesion promoters, an organo-functional silane, a combination of organo-functional silanes, or a combination of any of the foregoing. An organo-functional alkoxysilane can be an amine-functional alkoxysilane. The organo group can be selected from, for example, a thiol group, an amine group, a hydroxyl group, an epoxy group, an alkynyl group, an alkenyl group, an isocyanate group, or a Michael acceptor group.

A phenolic adhesion promoter can comprise a cooked phenolic resin, an un-cooked phenolic resin, or a combination thereof. Examples of suitable adhesion promoters include phenolic resins such as Methylon^{®} phenolic resin, and organosilanes, such as epoxy-, mercapto- or amine-functional silanes, such as Silquest^{®} organosilanes. A cooked phenolic resin refers to a phenolic resin that has been coreacted with a monomer, oligomer, and/or prepolymer.

A phenolic adhesion promoter can comprise the reaction product of a condensation reaction of a phenolic resin with one or more thiol-terminated polysulfides. Phenolic adhesion promoters can be thiol-terminated.

Examples of suitable phenolic resins include those synthesized from 2-(hydroxymethyl)phenol, (4-hydroxy-1,3-phenylene)dimethanol, (2-hydroxybenzene-1,3,4-triyl) trimethanol, 2-benzyl-6-(hydroxymethyl)phenol, (4-hydroxy-5-((2-hydroxy-5-(hydroxymethyl)cyclohexa-2,4-dien-1-yl)methyl)-1,3-phenylene)dimethanol, (4-hydroxy-5-((2-hydroxy-3,5-bis(hydroxymethyl)cyclohexa-2,4-dien-1-yl)methyl)-1,3-phenylene)dimethanol, and a combination of any of the foregoing. Suitable phenolic resins can be synthesized by the base-catalyzed reaction of phenol with formaldehyde. Phenolic adhesion promoters can comprise the reaction product of a condensation reaction of a Methylon^{®} resin, a Varcum^{®} resin, or a Durez^{®} resin available from Durez Corporation with a thiol-terminated polysulfide such as a Thioplast^{®} resin. Examples of Methylon^{®} resins include Methylon^{®} 75108 (allyl ether of methylol phenol, see U.S. Patent No. 3,517,082) and Methylon^{®} 75202. Examples of Varcum^{®} resins include Varcum^{®} 29101, Varcum^{®} 29108, Varcum^{®} 29112, Varcum^{®} 29116, Varcum^{®} 29008, Varcum^{®} 29202, Varcum^{®} 29401, Varcum^{®} 29159, Varcum^{®} 29181, Varcum^{®} 92600, Varcum^{®} 94635, Varcum^{®} 94879, and Varcum^{®} 94917. An example of a Durez^{®} resin is Durez^{®} 34071.

A coreactive composition can comprise an organo-functional alkoxysilane adhesion promoter such as an organo-functional alkoxysilane. An organo-functional alkoxysilane can comprise hydrolysable groups bonded to a silicon atom and at least one organofunctional group. An organo-functional alkoxysilane can have the structure R^{a}-(CH₂)ₙ-Si(-OR)₃₋ₙRₙ , where R^{a} is an organofunctional group, n is 0, 1, or 2, and R is alkyl such as methyl or ethyl. Examples of organofunctional groups include epoxy, amino, methacryloxy, or sulfide groups. An organo-functional alkoxysilane can be a dipodal alkoxysilane having two or more alkoxysilane groups, a functional dipodal alkoxysilane, a non-functional dipodal alkoxysilane or a combination of any of the foregoing. An organofunctional alkoxysilane can be a combination of a monoalkoxysilane and a dipodal alkoxysilane.

Examples of suitable amino-functional alkoxysilanes under the Silquest^{®} tradename include Silquest^{®} A-1100 (γ-aminopropyltriethoxysilane), Silquest^{®} A-1108 (γ-aminopropylsilsesquioxane), Silquest^{®} A-1110 (γ-aminopropyltrimethoxysilane), Silquest^{®} 1120 (*N*-β-(aminoethyl)-γ-aminopropyltrimethoxysilane), Silquest^{®} 1128 (benzylamino-silane), Silquest^{®} A-1130 (triaminofunctional silane), Silquest^{®} Y-11699 (bis-(γ-triethoxysilylpropyl)amine), Silquest^{®} A-1170 (bis-(γ-trimethoxysilylpropyl)amine), Silquest^{®} A-1387 (polyazamide), Silquest^{®} Y-19139 (ethoxy based polyazamide), and Silquest^{®} A-2120 (*N*-β-(aminoethyl)-γ-aminopropylmethyldimethoxysilane). Suitable amine-functional alkoxysilanes are commercially available, for example, from Gelest Inc, from Dow Coming Corporation, and Momentive Performance Materials, Inc.

A coreactive composition can comprise a filler or combination of filler. A filler can comprise, for example, inorganic filler, organic filler, low-density filler, conductive filler, or a combination of any of the foregoing.

A coreactive composition can comprise an inorganic filler or combination of inorganic filler.

An inorganic filler can be included to provide mechanical reinforcement and to control the rheological properties of the composition. Inorganic filler may be added to compositions to impart desirable physical properties such as, for example, to increase the impact strength, to control the viscosity, or to modify the electrical properties of a cured composition.

Inorganic filler can include carbon black, calcium carbonate, precipitated calcium carbonate, calcium hydroxide, hydrated alumina (aluminum hydroxide), talc, mica, titanium dioxide, alumina silicate, silica, precipitated silica, fumed silica, carbonates, chalk, silicates, glass, metal oxides, graphite, and combinations of any of the foregoing.

Inorganic filler can be surface treated to provide hydrophobic or hydrophilic surfaces that can facilitate dispersion and compatibility of the inorganic filler with other components of a coreactive composition. An inorganic filler can include surface-modified particles such as, for example, surface modified silica. The surface of silica particles can be modified, for example, to be tailor the hydrophobicity or hydrophilicity of the surface of the silica particle. The surface modification can affect the dispensability of the particles, the viscosity, the curing rate, and/or the adhesion.

A coreactive composition can comprise an organic filler or a combination of organic filler.

Organic filler can be selected to reduce the density of a vehicle part and/or to enhance the chemical resistance of a vehicle part such as to improve the resistant to solvents, chemicals, and vehicle fluids including oils, fuel, greases, lubricants, and/or hydraulic fluids. Suitable organic filler can also have acceptable adhesion to the polymer matrix. An organic filler can include solid powders or particles, hollow powders or particles, or a combination of any of the foregoing.

Organic filler can comprise thermoplastics, thermosets, or a combination thereof. Examples of suitable thermoplastics and thermosets include epoxies, epoxy-amides, ETFE copolymers, nylons, polyethylenes, polypropylenes, polyethylene oxides, polypropylene oxides, polyvinylidene chlorides, polyvinylfluorides, TFE, polyamides, polyimides, ethylene propylenes, perfluorohydrocarbons, fluoroethylenes, polycarbonates, polyetheretherketones, polyetherketones, polyphenylene oxides, polyphenylene sulfides, polystyrenes, polyvinyl chlorides, melamines, polyesters, phenolics, epichlorohydrins, fluorinated hydrocarbons, polycyclics, polybutadienes, polychloroprenes, polyisoprenes, polysulfides, polyurethanes, isobutylene isoprenes, silicones, styrene butadienes, liquid crystal polymers, and combinations of any of the foregoing.

An organic filler can include a low-density organic filler such as a modified, expanded thermoplastic microcapsules. Suitable modified expanded thermoplastic microcapsules can include an exterior coating of a melamine or urea/formaldehyde resin.

A coreactive composition can comprise low-density filler or a combination of low-density filler.

A coreactive composition can comprise low density microcapsules. A low-density microcapsule can comprise a thermally expandable microcapsule.

A thermally expandable microcapsule refers to a hollow shell comprising a volatile material that expands at a predetermined temperature. Thermally expandable thermoplastic microcapsules can have an average initial particle size of 5 µm to 70 µm, in some cases 10 µm to 24 µm, or from 10 µm to 17 µm. The term "average initial particle size" refers to the average particle size (numerical weighted average of the particle size distribution) of the microcapsules prior to any expansion. The particle size distribution can be determined using a Fischer Sub-Sieve Sizer or by optical inspection.

Examples of materials suitable for forming the wall of a thermally expandable microcapsule include polymers of vinylidene chloride, acrylonitrile, styrene, polycarbonate, methyl methacrylate, ethyl acrylate, and vinyl acetate, copolymers of these monomers, and combinations of the polymers and copolymers. A crosslinking agent may be included with the materials forming the wall of a thermally expandable microcapsule.

Examples of suitable thermoplastic microcapsules include Expancel^{™} microcapsules such as Expancel^{™} DE microspheres available from AkzoNobel. Examples of suitable Expancel^{™} DE microspheres include Expancel^{™} 920 DE 40 and Expancel^{™} 920 DE 80. Suitable low-density microcapsules are also available from Kureha Corporation.

Low density filler such as low density microcapsules can be characterized by a specific gravity within a range from 0.01 to 0.09, from 0.04 to 0.09, within a range from 0.04 to 0.08, within a range from 0.01 to 0.07, within a range from 0.02 to 0.06, within a range from 0.03 to 0.05, within a range from 0.05 to 0.09, from 0.06 to 0.09, or within a range from 0.07 to 0.09, wherein the specific gravity is determined according to ISO 787-11. Low density filler such as low-density microcapsules can be characterized by a specific gravity less than 0.1, less than 0.09, less than 0.08, less than 0.07, less than 0.06, less than 0.05, less than 0.04, less than 0.03, or less than 0.02, wherein the specific gravity is determined according to ISO 787-11.

Low density filler such as low microcapsules can be characterized by an average particle diameter from 1 µm to 100 µm and can have a substantially spherical shape. Low density filler such as low-density microcapsules can be characterized, for example, by a mean particle diameter from 10 µm to 100 µm, from 10 µm to 60 µm, from 10 µm to 40 µm, or from 10 µm to 30 µm, as determined according to ASTM D6913.

Low density filler such as low-density microcapsules can comprise expanded microcapsules or microballoons having a coating of an aminoplast resin such as a melamine resin. Aminoplast resin-coated particles are described, for example, in U.S. Patent No. 8,993,691. Such microcapsules can be formed by heating a microcapsule comprising a blowing agent surrounded by a thermoplastic shell. Uncoated low-density microcapsules can be reacted with an aminoplast resin such as a urea/formaldehyde resin to provide a coating of a thermoset resin on the outer surface of the particle.

With the coating of an aminoplast resin, an aminoplast-coated microcapsule can be characterized by a specific gravity, for example, within a range from 0.02 to 0.08, within a range from 0.02 to 0.07, within a range from 0.02 to 0.06, within a range from 0.03 to 0.07, within a range from 0.03 to 0.065, within a range from 0.04 to 0.065, within a range from 0.045 to 0.06, or within a range from 0.05 to 0.06, wherein the specific gravity is determined according to ASTM D D6913.

A coreactive composition can comprise micronized oxidized polyethylene homopolymer. An organic filler can include a polyethylenes, such as an oxidized polyethylene powder. Suitable polyethylenes are available, for example, from Honeywell International, Inc. under the tradename ACumist^{®}, from INEOS under the tradename Eltrex^{®}, and Mitsui Chemicals America, Inc. under the tradename Mipelon^{®}.

A coreactive composition can comprise, for example, from 1 wt% to 90 wt% of low-density filler, from 1 wt% to 60 wt%, from 1 wt% to 40 wt%, from 1 wt% to 20 wt%, from 1 wt% to 10 wt%, or from 1 wt% to 5 wt% of low-density filler, where wt% is based on the total weight of the composition.

A coreactive composition can comprise greater than 1 wt% low density filler, greater than 1.5 wt%, greater than 2 wt%, greater than 3 wt%, greater than 4 wt%, greater than 6 wt%, or greater than 10 wt% low-density filler, where wt% is based on the total weight of the composition.

A coreactive composition can comprise from 1 vol% to 90 vol% low-density filler, from 5 vol% to 70 vol%, from 10 vol% to 60 vol%, from 20 vol% to 50 vol%, or from 30 vol% to 40 vol% low density filler, where vol% is based on the total volume of the coreactive composition.

A coreactive composition can comprise greater than 1 vol% low-density filler, greater than 5 vol%, greater than 10 vol%, greater than 20 vol%, greater than 30 vol%, greater than 40 vol%, greater than 50 vol%, greater than 60 vol%, greater than 70 vol%, or greater than 80 vol% low-density filler, where vol% is based on the total volume of the coreactive composition.

A coreactive composition can include a conductive filler or a combination of conductive filler. A conductive filler can include electrically conductive filler, semiconductive filler, thermally conductive filler, magnetic filler, EMI/RFI shielding filler, static dissipative filler, electroactive filler, or a combination of any of the foregoing.

A coreactive composition can comprise an electrically conductive filler or combination of electrically conductive filler.

To render a part electrically conductive, the concentration of an electrically conductive filler can be above the electrical percolation threshold, where a conductive network of electrically conductive particles is formed. Once the electrical percolation threshold is achieved, the increase in conductivity as function of filler loading can be modeled by a simple power-law expression: ${σ}_{c} = {σ}_{f} {\left(φ-{φ}_{c}\right)}_{t}$ Eqn. 1 where φ is the filler volume fraction, φ_{c} is the percolation threshold, σ_{f} is the filler conductivity, φ is the composite conductivity, and t is a scaling component. The filler need not be in direct contact for current flow and conduction can take place *via* tunneling between thin layers of binder surrounding the electrically conductive filler particles, and this tunneling resistance can be the limiting factor in the conductivity of an electrically conductive composite.

A conductive filler can have any suitable shape and/or dimensions. For example, an electrically conductive filler can be in form of particles, powders, flakes, platelets, filaments, fiber, crystals, or a combination of any of the foregoing. A conductive filler can comprise a combination of conductive filler having different shapes, different dimensions, different properties such as, for example, different thermal conduction, electrical conduction, magnetic permittivity, electromagnetic properties, or a combination of any of the foregoing.

A conductive filler can be a solid or can be in the form of a substrate such as a particle having a coating of a conductive material. For example, a conductive filler can be a low-density microcapsule having an exterior coating of a conductive material.

Examples of suitable conductive filler include electrically conductive filler include metals, metal alloys, conductive oxides, semiconductors, carbon, carbon fiber, and combinations of any of the foregoing.

Other examples of electrically conductive filler include electrically conductive noble metal-based filler such as pure silver; noble metal-plated noble metals such as silver-plated gold; noble metal-plated non-noble metals such as silver plated cooper, nickel or aluminum, for example, silver-plated aluminum core particles or platinum-plated copper particles; noble-metal plated glass, plastic or ceramics such as silver-plated glass microspheres, noble-metal plated aluminum or noble-metal plated plastic microspheres; noble-metal plated mica; and other such noble-metal conductive filler. Non-noble metal-based materials can also be used and include, for example, non-noble metal-plated non-noble metals such as copper-coated iron particles or nickel-plated copper; non-noble metals, e.g., copper, aluminum, nickel, cobalt; non-noble-metal-plated-non-metals, e.g., nickel-plated graphite and non-metal materials such as carbon black and graphite. Combinations of electrically conductive filler and shapes of electrically conductive filler can be used to achieve a desired conductivity, EMI/RFI shielding effectiveness, hardness, and other properties suitable for a particular application.

The amount and type of electrically conductive filler can be selected to produce a coreactive composition which, when cured, exhibits a sheet resistance (four-point resistance) of less than 0.50 Ω/cm², or a sheet resistance less than 0.15 Ω/cm². The amount and type of filler can also be selected to provide effective EMI/RFI shielding over a frequency range of from 1 MHz to 18 GHz for an aperture sealed using a coreactive composition described herein.

Organic filler, inorganic filler, and low-density filler can be coated with a metal or metal alloy to provide conductive filler.

A conductive filler can comprise graphene. Graphene comprises a densely packed honeycomb crystal lattice made of carbon atoms having a thickness equal to the atomic size of one carbon atom, *i.e.,* a monolayer of sp² hybridized carbon atoms arranged in a two-dimensional lattice.

Graphene can comprise graphenic carbon particles. Graphenic carbon particles refer to carbon particles having structures comprising one or more layers of one-atom-thick planar sheets of sp²-bonded carbon atoms that are densely packed in a honeycomb crystal lattice. An average number of stacked layers can be less than 100, for example, less than 50. An average number of stacked layers can be 30 or less, such as 20 or less, 10 or less, or, in some cases, 5 or less. Graphenic carbon particles can be substantially flat, however, at least a portion of the planar sheets may be substantially curved, curled, creased or buckled. Graphenic carbon particles typically do not have a spheroidal or equiaxed morphology.

Graphenic carbon particles can have a thickness, measured in a direction perpendicular to the carbon atom layers, for example, of no more than 10 nm, no more than 5 nm, or no more than 4 or 3 or 2 or 1 nm, such as no more than 3.6 nm. Graphenic carbon particles can be from 1 atom layer up to 3, 6, 9, 12, 20 or 30 atom layers thick, or more. Graphenic carbon particles can have a width and length, measured in a direction parallel to the carbon atoms layers, of at least 50 nm, such as more than 100 nm, more than 100 nm up to 500 nm, or more than 100 nm up to 200 nm. Graphenic carbon particles can be provided in the form of ultrathin flakes, platelets or sheets having relatively high aspect ratios, where the aspect ratio is the ratio of the longest dimension of a particle to the shortest dimension of the particle, of greater than 3: 1, such as greater than 10: 1.

Graphenic carbon particles can comprise exfoliated graphite and have different characteristics in comparison with the thermally produced graphenic carbon particles, such as different size distributions, thicknesses, aspect ratios, structural morphologies, oxygen contents, and chemical functionalities at the basal planes/edges.

Graphenic carbon particles can be functionalized. Functionalized graphenic carbon particles refers to graphenic carbon particles in which one or more organic groups are covalently bonded to the graphenic carbon particles. The graphenic carbon particles can be functionalized through the formation of covalent bonds between the carbon atoms of a particle and other chemical moieties such as carboxylic acid groups, sulfonic acid groups, hydroxyl groups, halogen atoms, nitro groups, amine groups, aliphatic hydrocarbon groups, phenyl groups and the like. For example, functionalization with carbonaceous materials may result in the formation of carboxylic acid groups on the graphenic carbon particles. Graphenic carbon particles may also be functionalized by other reactions such as Diels-Alder addition reactions, 1,3-dipolar cycloaddition reactions, free radical addition reactions and diazonium addition reactions. Hydrocarbon and phenyl groups may be further functionalized. For graphenic carbon particles having a hydroxyl functionality, the hydroxyl functionality can be modified and extended by reacting these groups with, for example, an organic isocyanate.

Filler used to impart electrical conductivity and EMI/RFI shielding effectiveness can be used in combination with graphene.

Electrically conductive non-metal filler, such as carbon nanotubes, carbon fibers such as graphitized carbon fibers, and electrically conductive carbon black, can also be used in coreactive compositions in combination with graphene.

Conductive filler can comprise magnetic filler or combination of magnetic filler.

A magnetic filler can include a soft magnetic metal. This can enhance permeability of the magnetic mold resin. As a main component of the soft magnetic metal having a high bulk permeability, at least one magnetic material can be selected from Fe, Fe-Co, Fe-Ni, Fe-Al, and Fe-Si. A magnetic filler can be a soft magnetic metal having a high bulk permeability. Examples of magnetic filler include permalloys (FeNi alloys), a super permalloys (FeNiMo alloys), a sendust (FeSiAl alloy), FeSi alloys, FeCo alloys, FeCr alloys, FeCrSi alloys, FeNiCo alloys, and Fe. Other examples of magnetic filler include iron-based powder, iron-nickel based powder, iron powder, ferrite powder, Alnico powder, Sm₂Co₁₇ powder, Nd-B-Fe powder, barium ferrite BaFe₂O₄, bismuth ferrite BiFeO₃, chromium dioxide CrO₂, SmFeN, NdFeB, and SmCo.

A surface of a magnetic filler can have an insulating coating, for example, of a metal oxide such as Si, Al, Ti, Mg or an organic material for enhancing dispersion, adhesion, and insulation performance.

Examples of carbonaceous materials for use as conductive filler other than graphene and graphite include, for example, graphitized carbon black, carbon fibers and fibrils, vapor-grown carbon nanofibers, metal coated carbon fibers, carbon nanotubes including single- and multi-walled nanotubes, fullerenes, activated carbon, carbon fibers, expanded graphite, expandable graphite, graphite oxide, hollow carbon spheres, and carbon foams.

Conductive filler can include semiconductors or combinations of semiconductors.

Examples of suitable semiconductive materials include semiconducting nanomaterials such as nanoparticles, nanorods, nanowires, nanotubes, and nanosheets, semiconducting metal oxides such as tin oxide, antimony oxide, and indium oxide, semiconducting polymers such as PEDOT:PSS, polythiophenes, poly(p-phenylene sulfide), polyanilines, poly(pyrrole)s, poly(acetylene)s, poly(p-phenylene vinylene), polyparaphenylene, any other conjugated polymer, and semiconducting small molecules, for example, having a molecular mass less than 5,000 Da, such as rubrene, pentacene, anthracene, and aromatic hydrocarbons. Examples of semiconducting nanomaterials include quantum dots, **III-V or II-VI** semiconductors, Si, Ge, transition metal dichalcogenides such as WS₂, WSe₂, and MoSeₛ, graphene nanoribbons, semiconducting carbon nanotubes, and fullerenes and fullerene derivatives.

A filler can include metal fiber such as steel, titanium, aluminum, gold, silver, and alloys of any of the foregoing.

Examples of suitable ceramic fiber include metal oxide such as alumina fibers, aluminasilicate fibers, boron nitride fibers, silicon carbide fibers, and combinations of any of the foregoing.

Examples of suitable inorganic fiber include carbon, alumina, basalt, calcium silicate, and rock wool.

A fiber can be a glass fiber such as S-glass fibers, E-glass fibers, soda-lime-silica fibers, basalt fibers, or quartz fibers. Glass fibers may be in the form of woven and/or braided glass fibers, or non-woven glass fibers.

A fiber can include carbon such as graphite fibers, glass fibers, ceramic fibers, silicon carbide fibers, polyimide fibers, polyamide fibers, or polyethylene fibers. Continuous fibers can comprise titanium, tungsten, boron, shape memory alloy, graphite, silicon carbide, boron, aramid, poly(p-phenylene-2,6-benzobisoxazole), and combinations of any of the foregoing.

Fiber capable of withstanding high temperature include, for example, carbon fiber, high-strength glass (SiO₂) fiber, oxide fiber, alumina fiber, ceramic fiber, metal fiber, and fibers of high temperature thermoplastics or thermosets.

A filler can include carbon nanotubes. Suitable carbon nanotubes can be characterized by a thickness or length, for example, from 1 nm to 5,000 nm. Suitable carbon nanotubes can be cylindrical in shape and structurally related to fullerenes. Suitable carbon nanotubes can be open or capped at their ends. Suitable carbon nanotubes can comprise, for example, more than 90 wt%, more than 95 wt%, more than 99 wt%, or more than 99.9 wt% carbon, where wt% is based on the total weight of the carbon nanotube.

Carbon nanotubes can be provided as single-walled nanotubes (SWNT) and multi-walled nanotubes (MWNT), for example, as nanotubes having one single wall and nanotubes having more than one wall, respectively. In single-walled nanotubes a one atom thick sheet of atoms, for example, a one atom thick sheet of graphite, i.e., graphene, is rolled seamlessly to form a cylinder. Multi-walled nanotubes consist of a number of such cylinders arranged concentrically.

A multi-walled carbon nanotube can have, for example, on average from 5 to 15 walls. Single-walled nanotubes can be characterized by a diameter of at least 0.5 nm, such as at least 1 nm, or at least 2 nm. A SWNT can have a diameter less than 50 nm, such as less than 30 nm, or less than 10 nm. A length of single-walled nanotubes can be at least 0.05 µm, at least 0.1 µm, or at least 1 µm. A length can be less than 50 mm, such as less than 25 mm.

Multi-walled nanotubes can be characterized by an outer diameter of at least 1 nm, such as at least 2 nm, 4 nm, 6 nm, 8 nm, or at least 9 nm. An outer diameter can be less than 100 nm, less than 80 nm, 60 nm, 40 nm, or less than 20 nm. The outer diameter can be from 9 nm to 20 nm. A length of a multi-walled nanotube can be less than 50 nm, less than 75 nm, or less than 100 nm. A length can be less than 500 µm, or less than 100 µm. A length can be from 100 nm to 10 µm. A multi-walled carbon nanotube can have an average outer diameter from 9 nm to 20 nm and/or an average length from 100 nm to 10 µm.

A coreactive composition comprise a thermally-conductive filler or combination of thermally-conductive filler.

A thermally conductive filler can include, for example, metal nitrides such as boron nitride, silicon nitride, aluminum nitride, boron arsenide, carbon compounds such as diamond, graphite, carbon black, carbon fibers, graphene, and graphenic carbon particles, metal oxides such as aluminum oxide, magnesium oxide, beryllium oxide, silicon dioxide, titanium oxide, nickel oxide, zinc oxide, copper oxide, tin oxide, metal hydroxides such as aluminum hydroxide or magnesium hydroxide, carbides such as silicon carbide, minerals such as agate and emery, ceramics such as ceramic microspheres, mullite, silica, silicon carbide, carbonyl iron, cerium (III) molybdate, copper, zinc, or combinations of any of the foregoing.

A coreactive composition can comprise greater than 5 wt% of a conductive filler, greater than 10 wt%, greater than 20 wt%, greater than 30 wt%, greater than 40 wt%, greater than 50 wt%, greater than 60 wt%, greater than 70 wt%, greater than 80 wt%, greater than 90 wt%, or greater than 95 wt% of a conductive filler, where wt% is based on the total weight of the coreactive composition. A coreactive composition can comprise less than 5 wt% of a conductive filler, less than 10 wt%, less than 20 wt%, less than 30 wt%, less than 40 wt%, less than 50 wt%, less than 60 wt%, less than 70 wt%, less than 80 wt%, less than 90 wt%, or less than 95 wt% of a conductive filler, where wt% is based on the total weight of the coreactive composition. A coreactive composition can have from 1 wt% to 95 wt% of a conductive filler, from 5 wt% to 75 wt%, from 10 wt% to 60 wt%, or from 20 wt% to 50 wt% of a conductive filler, where wt% is based on the total weight of the coreactive composition.

A coreactive composition can comprise greater than 5 vol% of a conductive filler, greater than 10 vol%, greater than 20 vol%, greater than 30 vol%, greater than 40 vol%, greater than 50 vol%, greater than 60 vol%, greater than 70 vol%, greater than 80 vol%, greater than 90 vol%, or greater than 95 vol% of a conductive filler, where vol% is based on the total volume of the coreactive composition. A coreactive composition can comprise less than 5 vol% of a conductive filler, less than 10 vol%, less than 20 vol%, less than 30 vol%, less than 40 vol%, less than 50 vol%, less than 60 vol%, less than 70 vol%, less than 80 vol%, less than 90 vol%, or less than 95 vol% of a conductive filler, where vol% is based on the total volume of the coreactive composition. A coreactive composition can have from 1 vol% to 95 vol% of a conductive filler, from 5 vol% to 75 vol%, from 10 vol% to 60 vol%, or from 20 vol% to 50 vol% of a conductive filler, where vol% is based on the total volume of the coreactive composition.

A coreactive composition can comprise a reactive diluent or combination of reactive diluents. A reactive diluent can be used to reduce the viscosity of the coreactive composition. A reactive diluent can be a low molecular weight compound having at least one functional group capable of reacting with at least one of the major reactants of the coreactive composition and become part of the cross-linked network. A reactive diluent can have, for example, one functional group, or two functional group. A reactive dilute can be used to control the viscosity of a composition or improve the wetting of filler in a coreactive composition.

A reactive diluent can comprise, for example, an organo-functional vinyl ether or combination of organo-functional vinyl ethers. A reactive diluent can comprise, for example, vinyl-based diluents such as styrene, α-methyl styrene and para-vinyl toluene; vinyl acetate; and/or n-vinyl pyrrolidone.

A coreactive composition can comprise a plasticizer or a combination of plasticizers. Plasticizers can be included to adjust the viscosity of the coreactive composition and to facilitate deposition.

Examples of suitable plasticizers include a combination of phthalates, terephathlic, isophathalic, hydrogenated terphenyls, quaterphenyls and higher or polyphenyls, phthalate esters, chlorinated paraffins, modified polyphenyl, tung oil, benzoates, dibenzoates, thermoplastic polyurethane plasticizers, phthalate esters, naphthalene sulfonate, trimellitates, adipates, sebacates, maleates, sulfonamides, organophosphates, polybutene, butyl acetate, butyl cellosolve, butyl carbitol acetate, dipentene, tributyl phosphate, hexadecanol, diallyl phthalate, sucrose acetate isobutyrate, epoxy ester of iso-octyl tallate, benzophenone and combinations of any of the foregoing.

A coreactive composition can comprise a corrosion inhibitor or combination of corrosion inhibitors.

Examples of suitable corrosion inhibitors include, for example, zinc phosphate-based corrosion inhibitors, a lithium silicate corrosion inhibitor such as lithium orthosilicate (Li₄SiO₄) and lithium metasilicate (Li₂SiO₃), MgO, an azole, a monomeric amino acid, a dimeric amino acid, an oligomeric amino acid, a nitrogen-containing heterocyclic compound such as an azole, oxazole, thiazole, thiazolines, imidazole, diazole, pyridine, indolizine, and triazine, tetrazole, and/or tolyltriazole, corrosion resistant particles such as inorganic oxide particles, including for example, zinc oxide (ZnO), magnesium oxide (MgO), cerium oxide (CeO₂), molybdenum oxide (MoO₃), and/or silicon dioxide (SiO₂), and combinations of any of the foregoing.

A coreactive composition can comprise a fire retardant or combination of fire retardants. A fire retardant can include an inorganic fire retardant, an organic fire retardant, or a combination thereof.

Examples of suitable inorganic fire retardants include aluminum hydroxide, magnesium hydroxide, zinc borate, antimony oxides, hydromagnesite, aluminum trihydroxide (ATH), calcium phosphate, titanium oxide, zinc oxide, magnesium carbonate, barium sulfate, barium borate, kaolinite, silica, antimony oxides, and combinations of any of the foregoing.

Examples of suitable organic fire retardants include halocarbons, halogenated esters, halogenated ethers, chlorinated and/or brominated flame retardants, halogen free compounds such as organophosphorus compounds, organonitrogen compounds, and combinations of any of the foregoing.

A coreactive composition can comprise a moisture control additive or combination of moisture control additives. Examples of suitable moisture control additives include synthetic zeolite, activated alumina, silica gel, calcium oxide, magnesium oxide, molecular sieve, anhydrous sodium sulphate, anhydrous magnesium sulphate, alkoxysilanes, and combinations of any of the foregoing.

A coreactive composition can comprise a UV stabilizer or a combination of UV stabilizers. UV stabilizers include UV absorbers and hindered amine light stabilizers. Examples of suitable UV stabilizers include products under the tradenames Cyasorb^{®} (Solvay), Uvinul^{®} (BASF), and Tinuvin^{®} (BASF).

A coreactive composition can comprise a thermal stabilizer or combination of thermal stabilizers. Examples of thermal stabilizers include sterically hindered phenolic antioxidants such as pentaerythrityl tetrakis[3-(3,5-di-tert-butyl-4-hydroxyphenyl)propionate] (Irganox^{®} 1010, BASF), triethylene glycol bis[3-(3-tert-butyl-4-hydroxy-5-methylphenyl)propionate] (Irganox^{®} 245, BASF), 3,3'-bis[3-(3,5-di-*tert*-butyl-4-hydroxyphenyl)propionohydrazide] (Irganox^{®} MD 1024, BASF), hexamethylene glycol bis[3-(3,5-di-tert-butyl-4-hydroxyphenyl)propionate] (Irganox^{®} 259, BASF), and 3,5-di-tert-butyl-4-hydroxytoluene (Lowinox BHT, Chemtura).

A coreactive composition can comprise a colorant such as a pigment and/or dye.

Examples of suitable inorganic pigments include metal-containing inorganic pigments such as those containing cadmium, carbon, chromium, cobalt, copper, iron oxide, lead, mercury, titanium, tungsten, and zinc. Examples further include ultramarine blue, ultramarine violet, reduced tungsten oxide, cobalt aluminate, cobalt phosphate, manganese ammonium pyrophosphate and/or metal-free inorganic pigments. In particular embodiments the inorganic pigment nanoparticles comprise ultramarine blue, ultramarine violet, Prussian blue, cobalt blue and/or reduced tungsten oxide. Examples of specific organic pigments include indanthrone, quinacridone, phthalocyanine blue, copper phthalocyanine blue, and perylene anthraquinone.

Additional examples of suitable pigments include iron oxide pigments, in all shades of yellow, brown, red and black; in all their physical forms and grain categories; titanium oxide pigments in all the different inorganic surface treatments; chromium oxide pigments also co-precipitated with nickel and nickel titanates; black pigments from organic combustion (e.g., carbon black); blue and green pigments derived from copper phthalocyanine, also chlorinated and brominated, in the various α, β and ε crystalline forms; yellow pigments derived from lead sulfochromate; yellow pigments derived from lead bismuth vanadate; orange pigments derived from lead sulfochromate molybdate; yellow pigments of an organic nature based on arylamides; orange pigments of an organic nature based on naphthol; orange pigments of an organic nature based on diketo-pyrrolo-pyrrole; red pigments based on manganese salts of azo dyes; red pigments based on manganese salts of beta-oxynaphthoic acid; red organic quinacridone pigments; and red organic anthraquinone pigments.

Examples of suitable dyes include acridines, anthraquinones, arylmethane dyes, azo dyes, phthalocyanine dyes, quinone-imine dyes including azin dyes, indamins, indophenyls, oxazins, oxazones, and thiazines, thiazole dyes, saffranin dyes, xanthene dyes including fluorene dyes. Examples of suitable dyes include Alcian blue, Alcian yellow, Alizarin, Alizarin red, Alizarin yellow, Azophloxin, Bismarck brown R, Bismarck brown Y, Brilliant cresyl blue, Chrysoidine R, Crisoidine Y, Congo red, Crystal violet, Ethyl green, Fuchsin acid, Gentian violet, Janus green, Lissamine fast yellow, Malachite green, Martius yellow, Meldola blude, Metanil yellow, Methyl orange, Methyl red, Naphthalene black, Naphthol green, Naphthol yellow, Orange G, Purpurin, Rose bengal, Sudan II, Titan yellow, Tropaeolin O, Tropaeolin OO, Tropaeolin OOO, Victoria blue, and Xylene cyanol.

A coreactive composition can comprise a photochromic agent sensitive to the degree of exposure to radiation such as actinic radiation.

A coreactive composition can be prepared by combining and mixing one or more additional components in addition to the first component and the second component.

The one or more additional components can independently be combined with the first component and the second component in any suitable order. For example, the one or more additional components can be combined with the first component and the second component in a single mixer. The one or more additional components can be combined with the coreactive composition after the first and second components have been combined to form the coreactive composition. The one or more additional components can be combined with the first component and or the second component before the first component and/or second component are combined and mixed.

Each of the one or more additional components can be containing in an independent reservoir coupled to a pump, which is coupled to the flow of other components used to form a coreactive composition.

Each of the one or more additional components can be independently controlled metering pump and the volume ratio of the one or more additional components introduced into the coreactive composition can be changed continuously and/or discontinuously.

A component can be prepared as a final composition that can be stored until the time of use.

Alternatively, a component such as a first component, a second component, or the one or more additional components can be prepared at the time of use. A component can be dynamically formed by combining two or more precursor compositions.

FIG. 1 shows an example in which two or more precursor compositions 112/113/114 in separate reservoirs 111 are coupled to respective metering pumps 115, which are coupled to a primary reservoir 103. By controlling the volume ratio of the two or more precursor compositions the constituents of, as shown in FIG. 1, the first component 102 can be formed and can remain constant or can be dynamically changed during fabrication of a part. In FIG. 1 each of the precursor compositions 112/113/114 are coupled directly to the primary reservoir. However, the two or more precursor compositions can be combined in any suitable order.

As shown in FIG. 1 the precursor compositions can be combined in a primary reservoir and can be pumped into the mixer where the combined precursor compositions are mixed. Precursor compositions can also be combined and mixed before entering the primary reservoir. The combined precursor compositions can also be combined before entering primary pump 104 and/or after leaving primary pump 104 and before being combined and mixed with the second component.

A dynamically controlled multicomponent coreactive three-dimensional printing system can facilitate the ability to fabricate parts having a wide range of material properties.

After the first and second components are combined and mixed in a mixer to form a coreactive composition, the coreactive composition can be extruded under pressure through a nozzle to form an extrudate. A nozzle can have any suitable dimensions and shape.

The extrudate is deposited in successive layers onto a substrate and/onto a previously deposited layer to fabricate a part. It can be desirable that the extrudate formed from the coreactive composition is not fully cured at the time it is deposited onto a previously deposited layer that is not fully cured to facilitate the ability of the adjoining layers of the coreactive composition to coreact. The covalent bonding formed between adjoining coreacted layers can provide a robust interface. Parts in which the adjoining three-dimensionally printed layers can exhibit isotropic physical properties such as tensile strength and elongation in the direction parallel to the printing direction and orthogonal to the printing direction.

The cross-sectional dimension and shape of an extrudate can be substantially constant in the longitudinal dimension. The cross-sectional dimension and shape of an extrudate can vary along the longitudinal dimension or length of the extrudate or in different portions along the length of the extrudate. This can be accomplished by using a nozzle configured to dynamically change shape, or by replacing or switching nozzles while fabricating a part.

The dimensions of the extrudate can be adjusted by controlling the diameter of the nozzle and with or without adjusting the flow rate of the coreactive composition. In this way, the dimensions of the extrudate can be continuously or discontinuously adjusted to accommodate the dimensions of a part being fabricated. Thus, the thickness of a fabricated part can be determined by the thickness of the deposited extrudate, which can be controlled by the dimensions of the nozzle. The thickness of a fabricated part need not necessarily be determined by the deposition of multiple overlying layers. As the dimensions of the nozzle change the flow rate can be adjusted to maintain a constant printing speed or the printing speed can be changed to accommodate the change in the flow volume.

An extrudate can be substantially homogenous throughout a cross-sectional profile. For example, the amount of one or more constituents forming the coreacting composition and the subsequent extrudate can independently vary by less than 1%, less than 0.1%, or less than 0.01%, where percent refers to the wt% and/or the vol% of the respective constituent based on the total weight or the total volume, respectively, of the extrudate.

An extrudate having a homogeneous cross-sectional profile can be inhomogeneous in the longitudinal dimension. For example, the constituents forming the extrudate can be homogeneous along the longitudinal dimension or length of extrude or can vary along the entire length of the extrudate or in different longitudinal portions of the extrudate.

According to the invention, the extrudate is a coextrudate. A structured extrudate refers to an extrudate in which the constituents forming the extrudate are inhomogeneous within a cross-sectional profile of a coextrudate. For example, the amount of one or more constituents forming the coreacting composition and the subsequent extrudate can independently vary by greater than 1%, greater than 2%, greater than 5%, or greater than 10%, where percent refers to the wt% and/or the vol% of the respective constituent based on the total weight or the total volume, respectively, of the coextrudate.

For example, one portion of a coextrudate cross-section can have one coreactive composition and another portion of a coextrudate cross-section can have a different coreactive composition. The differences can be in the concentration of one or more of the constituents in the two different portions. For example, one portion can have a higher concentration of a filler or of one of the coreactive components than another portion.

Alternatively, or in addition, the differences can be in the type of one or more of the constituents and/or the absence of one or more of the constituents. For example, one portion of a coextrudate can have coreactive prepolymer with first backbone and the other portion can have a coreactive prepolymer with a different polymeric backbone. The two different portions can have different curing chemistries or can have the same curing chemistries.

In this way a structured extrudate can be used to impart different properties throughout a thickness of a part.

Portions of a coextrudate can have an inhomogeneous cross-sectional constituent profile and other portions can have a homogeneous cross-sectional constituent profile.

A coextrudate is formed by combining the parallel flows of one or more components without allowing the separate flows of the one or more components to mix. A coextrudate can comprise any desired suitable cross-sectional constituent profile. For example, a coextrudate can comprise parallel sheets comprising different components, a structured extrudate can have a core/shell structure with an inner component being surrounded by an outer component, or a structed extrudate can have a complex cross-sectional structure.

Coreactive compositions used in the methods described herein can cure at temperatures less than 50°C. These coreactive compositions can begin to cure when the coreactive compounds and any optional catalysts or cure accelerators are combined and mixed. The coreactive composition continues to cure as the extrudate is formed and deposited, and after deposition.

For coreactive compositions that includes a cure initiator that must be activated to initiate curing, the cure initiator can be activated within the mixer and nozzle, after the coreactive composition is extruded to form the extrudate, and/or after deposition. For example, to initiate a free radical polymerization reaction, a coreactive composition containing a photoinitiator, the extrude, and/or the deposited extrudate can be exposed to UV radiation to initiate the curing reaction.

When cured, a coreactive composition can exhibit, for example, a desired chemical resistance, low-temperature flexibility, hydrolytic stability, high temperature resistance, high tensile/elongation, impact strength, adhesion to the substrate, adhesion to a primer coating, hardness, electrical conductivity, EMI/RFI shielding, static dissipation, corrosion resistance, UV resistance, rain erosion resistance, dielectric breakdown strength, sound damping, or a combination of any of the foregoing.

A part can comprise one or more cured coreactive compositions.

A part can comprise multiple layers of a cured coreactive composition, wherein each of the multiple layers independently is prepared from the same or different coreactive composition. The differences in the coreactive compositions can comprise differences in the curing chemistries, the coreactive compounds, and/or the additives

A surface of a cured electrically conductive part or portion of a part can exhibit a surface resistivity, for example, less than 10⁶ Ohm/square, less than 10⁵ Ohm/square, less than 10⁴ Ohm/square, less than 10³ Ohm/square, less than 10² Ohm/square, less than 10 Ohm/square, less than 10⁻¹ Ohm/square, or less than 10⁻² Ohm/square. A surface of an electrically conductive part can have a surface resistivity, for example, from 10⁻² to 10², from 10² Ohm/square to 10⁶ Ohm/square, or from 10³ Ohm/square to 10⁵ Ohm/square. Surface resistivity can be determined according to ASTM D257 at 23°C/55%RH.

A surface of cured electrically conductive part or portion of a part can have a volume resistivity, for example, less than 10⁶ Ohm/cm, less than 10⁵ Ohm/cm, less than 10⁴ Ohm/cm, less than 10³ Ohm/cm, less than 10² Ohm/cm, less than 10 Ohm/cm, less than 10⁻¹ Ohm/cm, or less than 10⁻² Ohm/cm. A surface of an electrically conductive part can have a volume resistivity, for example, from 10⁻² Ohm/cm to 10¹ Ohm/cm, from 10² Ohm/cm to 10⁶ Ohm/cm, or from 10³ Ohm/cm to 10⁵ Ohm/cm. Volume resistivity can be determined according to ASTM D257 at 23°C/55%RH.

An electrically conductive part or portion of a part can have an electrical conductivity, for example, greater than 1 S cm⁻¹, greater than 10 S cm⁻¹, greater than 100 S cm⁻¹, greater than 1,000 S cm⁻¹, or greater than 10,000 S cm⁻¹. An electrically conductive part can have an electrical conductivity from 1 S cm⁻¹ to 10,000 S cm⁻¹, from 10 S cm⁻¹ to 1,000 cm⁻¹ or from 10 S cm⁻¹ to 500 S cm⁻¹.

An electrically conductive part or portion of a part can exhibit an attenuation at frequencies within a range from 10 KHz to 20 GHz, for example, of greater than 10 dB, greater than 30 dB, greater than 60 dB, greater than 90 dB, or greater than 120 dB. An electrically conductive part can exhibit an attenuation at frequencies within a range from 10 KHz to 20 GHz, for example, of from 10 dB to 120 dB, from 20 dB to 100 dB, from 30 dB to 90 dB, or from 40 dB to 70 dB.

A thermally conductive part or portion of a part can exhibit a thermal conductivity from 0.1 to 50 W/(m-K), from 0.5 to 30 W/(m-K), from 1 to 30 W/(m-K), from 1 to 20 W/(m-K), from 1 to 10 W/(m-K), from 1 to 5 W/(m-K), from 2 to 25 W/(m-K), or from 5 to 25 W/(m-K).

A part or portion of a part that exhibits a low density can comprise, for example, low-density filler such as low-density organic filler, hollow microspheres, coated microspheres, or combinations of any of the foregoing.

A part or portion of a part can exhibit a specific gravity, for example, less than 1.1, less than 1.0, less than 0.9, less than 0.8, or less than 0.7, where specific gravity is determined according to ISO 2781 at 23°C/55%RH.

A part or portion of a part that exhibits corrosion resistance can comprise, for example, one or more corrosion inhibitors.

A part or portion of a part that exhibits a high hardness can comprise, for example, one or more inorganic filler.

A part or portion of a part can exhibit a hardness, for example, greater than Shore 20A, greater than Shore 30A, greater than Shore 40A, greater than Shore 50A, or greater than Shore 60A, where hardness is determined according to ISO 868.

A part or portion of a part can exhibit, for example, a dielectric breakdown strength greater than 1 kV/mm, greater than 5 kV/mm, greater than 10 kV/mm, greater than 15 kV/mm, greater than 20 kV/mm, greater than 25 kV/mm, greater than 30 kV/mm, or greater than 50 kV/mm where dielectric breakdown strength is determined according to SAE ARP1512. A cured layer can exhibit, for example, a dielectric breakdown strength from 1 kV/mm to 50 kV/mm, from 56 kV/mm to 45 kV/mm, from 10 kV/mm ti 40 kV/mm, or from 15 kV/mm to 30 kV/mm, where dielectric breakdown strength is determined according to SAE ARP1512.

A part or portion of a part that exhibits sound damping properties can comprise an epoxy-containing compound where the epoxy-containing compound comprises an epoxy/polyol adduct, a polythiol, and a curing agent.

A part or portion of a part can comprise a layer or multiple layers that impart sound damping properties to the part and can exhibit a sound damping loss factor of at least 0.06 at 800 Hz, at least 0.04 at 400 Hz, or at least 0.02 at 200 Hz at 10°C, 2.5 mm layer thickness measured according to SAE test method J1637 and ASTM E-756 on 240 mm long, 10 mm wide, and 1 mm thick steel panels coated along 215 mm of the length.

A part or portion of a part can exhibit fuel-resistance. Various tests appropriate for specific applications and specifications can be used to determine fuel-resistance. For example, a fuel-resistant part can exhibit a percent volume swell of not greater than 40%, in some cases not greater than 25%, in some cases not greater than 20%, and in other cases not more than 10%, after immersion for one week at 60°C and ambient pressure in JRF Type I according to methods similar to those described in ASTM D792 (American Society for Testing and Materials) or AMS 3269 (Aerospace Material Specification). JRF Type I, as employed for determination of fuel resistance, has the following composition: toluene: 28 ± 1% by volume; cyclohexane (technical): 34 ± 1% by volume; isooctane: 38 ± 1% by volume; and tertiary dibutyl disulfide: 1 ± 0.005% by volume (see AMS 2629, issued July 1, 1989 § 3.1.1 etc., available from SAE (Society of Automotive Engineers)).

Any suitable part can be fabricated using coreactive three-dimensional printing

A three-dimensional printing apparatus for fabricating a part can comprise one or more pumps, one or more mixers, one or more nozzles, one or more material reservoirs, and automated control electronics.

A three-dimensional printing apparatus can comprise pressure controls, extrusion dies, coextrusion dies, coating applicators, temperature control elements, elements for irradiating a coreactive composition, or combinations of any of the foregoing.

A three-dimensional printing apparatus can comprise an apparatus such as a gantry for moving a nozzle with respect to a surface. The apparatus can be controlled by a processor.

Coreactive compositions can be deposited using any suitable coreactive three-dimensional printing equipment. The selection of suitable three-dimensional printing can depend on a number of factors including the deposition volume, the viscosity of the coreactive composition, the deposition rate, the reaction rate of the coreactive compounds, and the complexity of the part being fabricated. Each of the two or more reactive components can be introduced into an independent pump and injected into a mixer to combine and mix the two reactive components. A nozzle can be coupled to the mixer and the mixed coreactive composition can be pushed under pressure or extruded through the nozzle.

A pump can be, for example, a positive displacement pump, a syringe pump, a piston pump, or a progressive cavity pump. The two pumps delivering the two reactive components can be placed in parallel or placed in series. A suitable pump can be capable of pushing a liquid or viscous liquid through a nozzle orifice. This process can also be referred to as extrusion. A reactive component can be introduced into the mixer using two pumps in series.

For example, the two or more coreactive components can be deposited by dispensing materials through a disposable nozzle attached to a progressive cavity two-component system where the coreactive components are mixed in-line. A two-component system can comprise, for example, two progressive cavity pumps that separately dose reactants into a disposable static mixer dispenser or into a dynamic mixer. Other suitable pumps include positive displacement pumps, syringe pumps, piston pumps, and progressive cavity pumps. After mixing the two or more coreactive components to form a coreactive composition, the coreactive composition is formed into an extrudate as it is forced under pressure through one or more dies and/or one or nozzles to be deposited onto a base to provide an initial layer of a vehicle part, and successive layers can be deposited adjacent a previously deposited layer. The deposition system can be positioned orthogonal to the base, but also may be set at any suitable angle to form the extrudate such that the extrudate and deposition system form an obtuse angle with the extrudate being parallel to the base. The extrudate refers to the coreactive composition after the coreactive components are mixed, for example, in a static mixer or in a dynamic mixer. The extrudate can be shaped upon passing through a die and/or nozzle.

The base, the deposition system, or both the base and the deposition system may be moved to build up a three-dimensional article. The motion can be made in a predetermined manner, which may be accomplished using any suitable CAD/CAM method and apparatus such as robotics and/or computerize machine tool interfaces.

An extrudate may be dispensed continuously or intermittently to form an initial layer and successive layers. For intermittent deposition, a deposition system may interface with a switch to shut off the pumps, such as the progressive cavity pumps and interrupt the flow of one or more of the coreactive components and/or the coreactive composition.

A three-dimensional printing apparatus can include an in-line static and/or dynamic mixer as well as separate pressurized pumping compartments to hold the at least two coreactive components and feed the coreactive components into the static and/or dynamic mixer. A mixer such as an active mixer can comprise a variable speed central impeller having high shear blades within a nozzle. A range of nozzles may be used which have a minimum dimension, for example, from 0.2 mm to 100 mm, from 0.5 mm to 75 mm, from 1 mm to 50 mm, or from 5 mm to 25 mm. A nozzle can have a minimum dimension, for example, greater than 1 mm, greater than 5 mm, greater than 10 mm, greater than 20 mm, greater than 30 mm, greater than 40 mm, greater than 50 mm, greater than 60 mm, greater than 70 mm, greater than 80 mm, or greater than 90 mm. A nozzle can have a minimum dimension, for example, less than 100 mm, less than 90 mm, less than 80 mm, less than 70 mm, less than 60 mm, less than 50 mm, less than 40 mm, less than 30 mm, less than 20 mm, less than 10 mm, or less than 5 mm. A nozzle can have any suitable cross-sectional dimension such as, for example, round, spherical, oval, rectangular, square, trapezoidal, triangular, planar, or other suitable shape.

A range of static and/or dynamic mixing nozzles may be used which have, for example, an exit orifice dimension from 0.6 mm to 2.5 mm, and a length from 30 mm to 150 mm. For example, an exit orifice diameter can be from 0.2 mm to 4.0 mm, from 0.4 mm to 3.0 mm, from 0.6 mm to 2.5 mm, from 0.8 mm to 2 mm, or from 1.0 mm to 1.6 mm. A static mixer and/or dynamic can have a length, for example, from 10 mm to 200 mm, from 20 mm to 175 mm, from 30 mm to 150 mm, or from 50 mm to 100 mm. A mixing nozzle can include a static and/or dynamic mixing section and a dispensing section coupled to the static and/or dynamic mixing section. The static and/or dynamic mixing section can be configured to combine and mix the coreactive materials. The dispensing section can be, for example, a straight tube having any of the above orifice diameters. The length of the dispensing section can be configured to provide a region in which the coreactive compounds can begin to react and build viscosity before the coreactive composition is deposited on the article. The length of the dispensing section can be selected, for example, based on the speed of deposition, the rate of reaction of the co-reactants, and the desired viscosity.

A coreactive composition can have a residence time in the static and/or dynamic mixing nozzle, for example, from 0.25 seconds to 5 seconds, from 0.3 seconds to 4 seconds, from 0.5 seconds to 3 seconds, or from 1 seconds to 3 seconds. Other residence times can be used as appropriate based on the curing chemistries and curing rates of a coreactive composition

In general, a suitable residence time is less than the gel time of the coreactive composition.

A three-dimensional printing apparatus can deposit a coreactive composition at a volume flow rate, for example, from 0.1 mL/min to 20,000 mL/min, such as from 1 mL/min to 12,000 mL/min, from 5 mL/min to 8,000 mL/min, or from 10 mL/min to 6,000 mL/min. A coreactive composition can be deposited at a volume flow rate, for example, greater than 0.1 mL/min, greater than 1 mL/min, greater than 10 mL/min, greater than 100 mL/min, greater than 1,000 mL/min, or greater than 10,000 mL/min. A three-dimensional printing apparatus can deposit a coreactive composition can be deposited at a volume flow rate, for example, less than 20,000 mL/min, less than 10,000 mL/min, less than 1,000 mL/min, less than 100 mL/min, less than 10 mL/min, or less than 1 mL/min. The volume flow rate can depend, for example, on the viscosity of a coreactive composition, the extrusion pressure, the nozzle diameter, and the reaction rate of the coreactive compounds.

A three-dimensional printing apparatus can deposit a coreactive composition at a deposition speed, for example, from 1 mm/sec to 400 mm/sec, such as from 5 mm/sec to 300 mm/sec, from 10 mm/sec to 200 mm/sec, or from 15 mm/sec to 150 mm/sec. A three-dimensional printing apparatus can deposit a coreactive composition, for example, at greater than 1 mm/sec, greater than 10 mm/sec, or greater than 100 mm/sec. A three-dimensional printing apparatus can deposit a coreactive composition, for example, at less than 400 mm/sec, less than 100 mm/sec, or less than 10 mm/sec. The deposition speed can depend, for example, on the viscosity of the coreactive composition, the extrusion pressure, the nozzle diameter, and the reaction rate of the coreactive compounds. The deposition speed refers to the speed at which a nozzle used to extrude a coreactive composition moves with respect to a surface onto which the coreactive composition is being deposited.

A static and/or dynamic mixing nozzle can be heated or cooled to control, for example, the rate of reaction between the coreactive compounds and/or the viscosity of the coreactive compounds. An orifice of a deposition nozzle can have any suitable shape and dimensions. A three-dimensional printing apparatus can comprise multiple deposition nozzles. The nozzles can have a fixed orifice dimension and shape, or the nozzle orifice can be controllably adjusted. The mixer and/or the nozzle may be cooled to control an exotherm generated by the reaction of the coreactive compounds.

The speed at which the coreactive composition reacts to form the thermoset polymeric matrix can be determined and/or controlled by the selection of the reactive functional groups of the coreactive compounds. The reaction speed can also be determined by factors that lower the activation energy of the reaction such as heat and/or catalysts.

Reaction rates can be reflected in the gel time of a coreactive composition. A fast curing chemistry refers to a chemistry in which the co-reactive compounds have a gel time less than 5 minutes, less than 4 minutes, less than 3 minutes, less than 2 minutes, less than 1 minute, less than 45 seconds, less than 30 seconds, less than 15 seconds, or less than 5 seconds. Coreactive compounds can have a gel time, for example, from 0.1 seconds to 5 minutes, from 0.2 seconds to 3 minutes, from 0.5 seconds to 2 minutes, from 1 second to 1 minute, or from 2 seconds to 40 seconds. Gel time is the time following mixing the coreactive compounds when the coreactive compounds are no longer stirrable by hand.

A coreactive composition having a high viscosity can have a long gel time. Because of the high viscosity the deposited coreactive composition can retain an intended shape following deposition and the ability to retain the intended shape may not depend as much on the curing to increase the viscosity. For coreactive compositions having a high viscosity, the gel time can be, for example, greater than 0.5 hours, greater than 1 hour, greater than 2 hours, greater than 5 hours, or greater than 10 hours. For example, for a coreactive composition having a high viscosity, the gel time can be from 1 to 10 hours, from 1.5 to 8 hours, from 2 hours to 6 hours, or from 3 hours to 5 hours.

Because the coreactive components can be uniformly combined and mixed a coreactive composition can begin to cure immediately upon mixing dimensions of the coreactive composition and the extrudate that is forced through the nozzle is not particularly limited. Thus, coreactive three-dimensional printing facilitates the use of large dimension extrudates, which facilitates the ability to rapidly fabricate large parts such as vehicle parts.

Depending on the dimensions and thickness of a part, and the dimensions of an extrudate comprising a coreactive composition a large part can be fabricated by applying multiple layers side-by-side and/or above other layers. For example, for a relatively thicker part, the thickness can be built up by applying one or more layers on top of a previously applied layer. For a relatively thinner part it can be sufficient to successively deposit an extrudate adjacent to a previously applied extrude and in that way build up the width of a part. The latter approach may be suitable for fabricating exterior vehicle parts such as doors, hoods, side panels, roofs, and hoods.

For vehicle parts, the entire part or an exterior portion of a part can be designed to provide, for example, chemical resistance, environmental resistance, resistance to gas and vapor diffusion, impact strength, scratch resistance, electrical conductivity, static dissipation, EMI/RFI shielding, or a combination of any of the foregoing.

Interior and/or inner portions of a part can be designed to provide, for example, impact strength, mechanical stability under use conditions, and low density.

Coreactive three-dimensional printing can also facilitate the ability to fabricate parts having a wide variety of material properties by either continuously or intermittently changing the coreactive composition during manufacturing.

For example, the constituents of a coreactive composition can be changed by (1) adjusting the volume ratio of one or more components; (2) by introducing one or more additional component; (3) by removing one or more of the components; (4) by changing the constituents of a coreactive component; or a combination of any of the foregoing.

The deposition speed of an extrudate can be selected based on parameters such as the flow rate of the coreactive composition, the viscosity of the coreactive composition, and the reaction rate of the coreactive compounds, such that the deposited extrudate retains an intended shape following deposition. For example, it can be important that the deposited layer not sag or shift and if necessary support one or more overlying layers.

The deposition speed can also be selected such that at least a portion of an exterior surface of a previously deposited layer has not fully cured when a subsequent layer is applied onto the portion of the exterior surface that has not fully cured. In this way, the unreacted compounds in the first layer can then react with the unreacted compounds in the second layer to form covalent bonds and enhance interlayer strength.

After a part has been fabricated, the nozzle can be positioned to discharge area, the flow of one of coreactive components can be stopped and the apparatus purged to prevent a fully cured coreactive composition from forming in and clogging the apparatus. Alternatively, the introduction of all of the coreactive components can be stopped and a non-reactive composition introduced into the apparatus to purge and remove materials to clean the system for subsequent use.

The size of the automated manufacturing equipment can be adapted to the size of the vehicle part being manufactured.

For example, a three-dimensional printing system can comprise a gantry system that can move a deposition nozzle within the horizontal plane and a vertical motion system for moving the nozzle vertically with respect to a surface.

As another example, a three-dimensional printing system can consist of robotic arm that can be suspended above a surface attached to a rotatable nozzle assembly.

The positioning of the three-dimensional printing system can be controlled by a processor

The motion can be determined based on a CAD/CAM model of the vehicle part being fabricated.

A coreactive composition can be applied to a base in which the fabricated part is removed from the base and the base is not incorporated into the part.

A coreactive composition can be applied to a preform that is incorporated into the fabricated part. For example, a coreactive composition can be deposited onto a metal preform. The coreactive composition can adhere to the metal preform such that when the completed part incorporates the metal preform, for example, either as the exterior or interior surface of the part. Other examples of preforms include composites, fabrics, matting, laminates, honeycombs, reinforcement ribs, trusses, mounts, fasteners, rails, connections, solid sheets, perforated sheets, and combinations of any of the foregoing. Preforms can augment and enhance certain properties of the fabricated part such as, for example, impact strength, torsional strength, piercing strength, weight reduction, facilitate assembly, dent resistance, chemical resistance, aesthetics, scratch resistance or a combination of any of the foregoing.

As disclosed herein, similar materials can be applied in a secondary operation after the part is formed and the coreactive composition has fully cured.

Depositing the coreactive composition onto a preform during cure can facilitate the ability of the coreactive compounds to react with complimentary reactants on the surface of the preform. Preforms can be treated with compounds having suitable coreactive functional groups, heat can be applied to the preform, or adhesion promoting interlayers can be applied to preform to enhance bonding between the preform and a curing coreactive composition.

Composites, fabric, matting, and laminates can comprise fiber such as, for example, metal, thermoplastic, thermoset, natural, silica, ceramic, carbon fiber, or a combination of any of the foregoing.

A part can be fabricated to include a preform within the interior of the part. For example, using coreactive manufacturing methods one or more layers of a coreactive composition can be deposited to form a substructure. Then the deposition of the coreactive composition can be interrupted, a preform applied to the substructure, and additional layers of the coreactive composition deposited onto the preform such that the preform is enclosed within the cured coreactive composition.

An extrudate comprising a coreactive composition can be deposited onto a coating such as a multilayer coating. The multilayer coating can be an exterior coating. The multilayer coating can be an aesthetic coating, a special effects coating, a haptic coating, a scratch resistant coating, a conductive coating, a reflective coating over a certain wavelength range, an absorptive coating over a certain wavelength range, or other exterior coating having desired characteristics. The coating can include an adhesion layer configured to facilitate bonding between the multilayer coating and the deposited extrudate. The coating can be an electrically conductive coating, can have a high dielectric breakdown strength, and/or can have a high solvent resistance.

Coreactive three-dimensional printing methods described herein can be used to fabricate complex structures. For example, a shell can be fabricated using a higher viscosity coreactive composition such as a coreactive composition having a viscosity from 1E5 mPa·s [cP] to 1E8 mPa·s [cP]. The shell is configured to define an internal reservoir. After the shell is formed, the internal volume can be filled with a low viscosity coreactive composition such as a composition having a viscosity from 500 mPa·s [cP] to 2,000 mPa·s [cP]. The low viscosity coreactive composition can spread throughout the internal volume and does not need to be printed. The low viscosity coreactive composition can comprise a blowing agent that can cause the material to expand, for example, from 25 vol% to 3,000 vol% based on the initial volume of the coreactive composition. The lower viscosity coreactive composition can have an initially high viscosity such as a viscosity greater than 100,000 mPa·s [cP] that undergoes shear thinning prior to deposition and can have a slow recovery time such that the material maintains a low viscosity during and following deposition.

As presented in Example 4, lattice structures having different bi-directional properties can also be fabricated. Other complex structures can be fabricated using the coreactive three-dimensional printing methods described herein.

Coreactive three-dimensional printing methods described herein can be used to fabricate parts having different properties in different directions. As shown in Example 4, a part can be flexible in one direction and rigid in another directions. Certain portions of a part can be rigid and other parts can be flexible. For example, flexible hinges can be incorporated into a part by changing the mix ratio or the constituents of a coreactive composition. A part having any suitable combination of properties can be fabricated using the coreactive three-dimensional printing methods described herein.

After a part is fabricated, the three-dimensionally printed part can be subjected to one or more secondary operations.

Examples of secondary operations include smoothing, coating, painting, treating, laminating, and sealing.

A surface of a part can be smoothed, for example, by sanding or blasting,

A surface of part can be coated with one or more coatings. A coating can impart desired property to a surface such as corrosion resistance, adhesion between the surface and an overlying coating, interlayer adhesion, solvent resistance, static dissipation, electrical conductivity, aesthetics, RFI/EMI shielding, and/or scratch resistance.

A surface of a part can be painted with one or more layers of paint.

A laminate can be applied to surface of a three-dimensionally printed part. For example, a laminate can be one or more metal sheets, a composite sheet, a fabric, or multilayer coating.

When a part includes a preform as build surface or as an interior feature of a part, the fabricated part can be subjected to stress relief operations such as heating the fabricated part.

A part can be fabricated on a substrate. The substrate can be removed after the part is fabricated or can be incorporated into the part. For example, a coreactive composition can be deposited onto a substrate having a textured surface and after the coreactive composition is cured, the textured substrate can be removed to impart a textured surface to the part. As another example, a coreactive composition can be deposited onto a substrate fabricated using methods described herein. The surface of the substrate can be fully cured or can be partially cured at the time the coreactive composition is deposited onto the substrate surface. Depositing the coreactive composition onto a partially cured substrate surface can provide for the substrate surface and the deposited coreactive composition to react to provide a robust interface between the substrate surface and the overlying cured layer. Multiple layers of coreactive compositions can be deposited with each layer imparting a desired property to a vehicle part. For example, a multilayer vehicle part can have a flexible or soft layer, a rigid supporting layer, and a low-density foam layer.

The claimed coreactive three-dimensional printing apparatus comprises an extrusion nozzle; a mixer coupled to the extrusion nozzle; a first primary pump coupled to the mixer and a second primary pump coupled to the mixer; a first primary reservoir coupled to the first primary pump and a second primary reservoir coupled to the second primary pump; one or more secondary reservoirs coupled to the first primary reservoir through respective secondary pumps and/or one or more secondary reservoirs coupled to the second primary reservoir through respective secondary pumps; and a controller interconnected to the first primary pump and the second primary pump, wherein the controller is configured to change a volume mix ratio of a first component being pumped by the first primary pump and a second component being pumped by the second primary pump, wherein the extrusion nozzle comprises a coextrusion nozzle.

Each of the first primary pump and the second primary pump can be independently controllable, for example to change the flow rate of a component being pumped into the mixer, to change the extrusion rate of a coreactive composition being extruded from the apparatus, and/or to change the volume mix ratio of the components being combined in the mixer. The controller can change these parameters continuously or discontinuously during deposition of a coreactive composition, or the parameters can be held constant during portions of the deposition process.

The extruder can include the mixer a section before the mixer, a section after the mixer, and an extrusion nozzle. The extruder can include a shear-thinning device such a helical mixer situated by the mixer and the extrusion nozzle. The extrusion nozzle is a coextrusion nozzle.

The apparatus can include one or more additional primary pumps coupled to the extruder wherein each of the one or more primary pumps can be independently coupled to a respect primary reservoir.

The one or more additional pumps can independently be coupled to the extruder before the mixer and/or between mixer and the extrusion nozzle.

Each of the primary reservoirs can be coupled to purges, which allow the primary reservoirs to be evacuated to remove material from the apparatus before depositing a new coreactive composition.

Each of the primary reservoirs can be coupled to one or more secondary reservoirs through respective secondary pumps. Each of the secondary pumps can be independently controllable. The secondary reservoirs can contain different compositions which can be combined in different volume mix ratios to dynamically change the constituents form a component during deposition. The constituents forming a component can be changed continuously, changed discontinuously, or can remain constant at different times while a part is being fabricated.

Two or more of the secondary reservoirs can be coupled to a mixer such that the compositions in the secondary reservoirs are combined and mixed before being pumped into the primary reservoir. Alternatively, mixing of the compositions can occur when an unmixed component is combined and mixed with another component in the mixer.

The apparatus can be mounted on a gantry that provides for three-dimensional motion of the extrusion nozzle to fabricate a part.

The apparatus can further comprise one or more devices for activating a cure initiator such as a source of actinic radiation or heat, or a device that generates a mechanical force such as a shear force.

Coreactive three-dimensional printing methods described herein can be used to fabricate any suitable part. Examples of parts include vehicle parts, architectural parts, construction parts, electronic parts, furniture, medical devices, portable devices, telecommunications devices, athletic equipment, apparel, and toys.

Parts such as vehicle parts including automotive vehicle parts and aerospace vehicle parts can be made using coreactive three-dimensional printing methods described herein.

Coreactive three-dimensional printing methods described herein can be used to fabricate internal and external vehicle parts such as motor vehicle parts, railed vehicle parts, aerospace vehicle parts, military vehicle parts, and watercraft parts.

Any suitable vehicle part can be fabricated using the materials and three-dimensional printing methods described herein.

A vehicle part can be a new part or a replacement part.

The term "vehicle" is used in its broadest sense and includes all types of aircraft, spacecraft, watercraft, and ground vehicles. For example, a vehicle can include, aircraft such as airplanes including private aircraft, and small, medium, or large commercial passenger, freight, and military aircraft; helicopters, including private, commercial, and military helicopters; aerospace vehicles including, rockets and other spacecraft. A vehicle can include a ground vehicle such as, for example, trailers, cars, trucks, buses, vans, construction vehicles, golf carts, motorcycles, bicycles, scooters, trains, and railroad cars. A vehicle can also include watercraft such as, for example, ships, boats, and hovercraft.

A vehicle part can be, for example, part for a motor vehicle, including automobile, truck, bus, van, motorcycles, scooters, and recreational motor vehicles; railed vehicles including trains and trams; bicycles; aerospace vehicles including airplanes, rockets, spacecraft, jets, and helicopters; military vehicles including jeeps, transports, combat support vehicles, personnel carriers, infantry fighting vehicles, mine-protected vehicles, light armored vehicles, light utility vehicles, and military trucks; and watercraft including ships, boats, and recreational watercraft.

Examples of aviation vehicles include F/A-18 jet or related aircraft such as the F/A-18E Super Hornet and F/A-18F; in the Boeing 787 Dreamliner, 737, 747, 717 passenger jet aircraft, a related aircraft (produced by Boeing Commercial Airplanes); in the V-22 Osprey; VH-92, S-92, and related aircraft (produced by NAVAIR and Sikorsky); in the G650, G600, G550, G500, G450, and related aircraft (produced by Gulfstream); and in the A350, A320, A330, and related aircraft (produced by Airbus). Methods described herein can be used in any suitable commercial, military, or general aviation aircraft such as, for example, those produced by Bombardier Inc. and/or Bombardier Aerospace such as the Canadair Regional Jet (CRJ) and related aircraft; produced by Lockheed Martin such as the F-22 Raptor, the F-35 Lightning, and related aircraft; produced by Northrop Grumman such as the B-2 Spirit and related aircraft; produced by Pilatus Aircraft Ltd.; produced by Eclipse Aviation Corporation; or produced by Eclipse Aerospace (Kestrel Aircraft).

A vehicle part can be an interior vehicle part or an exterior vehicle part.

A vehicle can comprise a motor vehicle and the motor vehicle part can comprise a hood, door, side panel, bumper, roof, wheel well, dashboard, seat, trunk, handle, floor, chassis, cabin, chassis, cargo bed, steering wheel, fuel tank, engine block, trim, bumper, and/or a battery casing.

A vehicle can comprise a railed vehicle and the railed vehicle part can comprise an engine and/or a rail car.

A vehicle can comprise an aerospace vehicle and the aerospace part can comprise a cockpit, fuselage, wing, aileron, tail, door, seat, interior panel, fuel tank, interior panel, flooring, and/or frame.

A vehicle can comprise a military vehicle and the military vehicle part can comprise a hood, door, side panel, bumper, roof, wheel well, dashboard, seat, trunk, handle, floor, chassis, cabin, chassis, cargo bed, steering wheel, fuel tank, engine block, trim, bumper, a mount, a turret, an undercarriage, and/or a battery casing.

A vehicle comprises a watercraft and the watercraft part can comprise a hull, an engine mount, a seat, a handle, a chassis, a battery, a battery mount, a fuel tank, an interior accessory, flooring, and/or paneling.

Vehicle parts fabricated using the materials and methods described herein can have properties for the intended purpose.

For example, an automotive part can be designed have a light weight.

An external part for military vehicle can be designed to have a high impact strength.

A part for a commercial aerospace vehicle can be designed to have a light weight and/or to be static dissipative.

An external part for a military aircraft can be designed to exhibit RFI/EMI shielding properties.

Coreactive three-dimensional printing methods can be adapted to fabricate custom designed vehicle parts, replacement parts, upgraded parts, specialty parts, and/or high-performance parts rapidly and cost-effectively in low volume production.

### EXAMPLES

Embodiments provided by the present disclosure are further illustrated by reference to the following examples, which describe fabrication of vehicle parts using coreactive three-dimensional printing and properties of parts. It will be apparent to those skilled in the art that many modifications, both to materials, and methods, may be practiced without departing from the scope of the invention defined by the appended claims.

### Example 1

### Rigid Exterior Vehicle Part

An exterior vehicle part was fabricated by three-dimensional printing a coreactive polyurea composition. The coreactive polyurea composition was prepared by combining a polyamine component and a polyisocyanate component in a three-dimensional printing apparatus.

The constituents of the polyamine component are listed in Table 1.

**Table 1. Polyamine component.**

| Constituent | Part by weight (g) |
|---|---|
| ¹ Desmophen^{®} NH-1220 | 28.03 |
| ² Vulcan^{®} XC-72R | 0.42 |
| ³ Desmophen^{®} NH-1420 | 13.52 |
| ⁴ Jeffamine^{®} T-5000 | 27.20 |
| ⁵ HXA CE 425 | 20.30 |
| ⁶ Cyasorb^{®} UV-1164L | 0.88 |
| ⁷ Cabosil^{®} TS-720 | 4.51 |
| ⁸ Tinuvin^{®} 292 | 1.76 |
| ⁹ Disparlon^{®} 6500 | 3.39 |

| | |
|---|---|
| ¹ Desmophen^{®} NH-1220, aspartic ester diamine, CAS# 168253-59-6, available from Covestro LLC. ² Vulcan^{®} XC-72R, carbon black, CAS# 1333-86-4, available from Cabot Corporation. ³ Desmophen^{®} NH-1420, aspartic ester di-amine, CAS# 136210-30-5, available from Covestro LLC. ⁴ Jeffamine^{®} T-5000, polyetheramine, CAS# 64852-22-8, available from Huntsman Corporation. ⁵ HXA CE 425, aliphatic diamine, available from The Hanson Group, LLC. ⁶ Cyasorb^{®} UV-1164L, light stabilizer and UV absorber, CAS#137759-38-7, available from Solvay. ⁷ Cabosil^{®} TS-720, fumed silica, available from Cabot Corporation. ⁸ Tinuvin^{®} 292, hindered amine light stabilizer (HALS), CAS# 41556-26-7, available from BASF. ⁹ Disparlon^{®} 6500, polyamide thixotrope, CAS# 25038-54-4, available from King Industries, Inc. | |

The constituents listed in Table 1 were weighed into a metal reactor container and mixed using a Cowles blade for 30 min at 74°C to activate the Disparlon^{®} 6500 polyamide thixotrope. The dispersion was transferred to a Max 300 L DAC cup (FlackTek). The Cabosil^{®} TS-720 was added and dispersed using a FlackTek Speedmixer^{®}.

The constituents of the polyisocyanate component are listed in Table 2.

**Table 2. Polyisocyanate component.**

| Constituent | Part by weight (g) |
|---|---|
| Polyisocyanate | 95 |
| ¹⁰ CAT 133 | 0.1 |
| ⁷ Cabosil^{®} TS-720 | 5 |

| | |
|---|---|
| ¹⁰ CAT 133, catalyst, available from PPG Industries Inc. | |

The CAT 133 catalyst was weighed into a Max 300 L DAC cup (FlackTek). The Cabosil^{®} TS-720 was added and dispersed using a FlackTek Speedmixer^{®}.

The polyamine and polyisocyanate components were transferred from the DAC cups to separate Optimum^{®} cartridges (Nordson) using a FlackTek SpeedDisc^{®}. The polyamine and polyisocyanate components were combined in a 1:1 volume ratio, mixed, and printed at 23°C using a ViscoTec 2K extruder mounted on a Lulzbot Taz 6 gantry.

Three-dimensional printing was used to fabricate different polyurea parts.

### Example 2

### Multi-Material Rigid, Flexible, and Foam Interior Vehicle Component:

An interior vehicle center console lid was printed using coreactive extrusion. Three coreactive components were used to fabricate the console lid. A first component comprised a rigid 2K-printable polyurea composition; the second component comprised a flexible 2K-printable polyurea composition; and the third component comprise a 2K-printable polyurethane foam composition. This interior vehicle console lid was fabricated by printing a base layer of the flexible polyurea onto a leather substrate, printing a mid-layer of polyurethane foam over the base layer, and printing a top-layer of the rigid polyurea.

The constituents of the rigid polyurea polyamine component is are listed in Table 3:

**Table 3. Rigid polyurea polyamine component.**

| Constituent | Part by weight (g) |
|---|---|
| ¹ Desmophen^{®} NH-1220 | 27.27 |
| ¹¹ Clearlink^{®} 1000 | 18.18 |
| ³ Desmophen^{®} NH-1420 | 34.34 |
| ¹² Jeffamine^{®} T-3000 | 7.07 |
| ¹³ Type K20 Glass Bubbles | 7.07 |
| ⁷ Cabosil^{®} TS-720 | 2.02 |
| ⁹ Disparlon^{®} 6500 | 4.04 |

| | |
|---|---|
| ¹¹ Clearlink^{®} 1000, CAS# 2154279-60-4, available from Dorf Ketal. ¹² Jeffamine^{®} T-3000, polyetheramine, CAS# 64852-22-8, available from Huntsman Corporation. ¹³ Type K20 Glass Bubbles, hollow glass microspheres, available from 3M. | |

The constituents listed in Table 3, except the Cabosil^{®} TS-720, were weighed into a metal reactor container and mixed using a Cowles blade for 30 min at 74°C to activate the Disparlon^{®} 6500 polyamide thixotrope. The dispersion was transferred to a Max 300 L DAC cup (FlackTek). The Cabosil^{®} TS-720 was added dispersed using a FlackTek Speedmixer^{®}.

The constituents of the rigid polyurea polyisocyanate component are listed in Table 4:

**Table 4. Rigid polyurea polyisocyanate component.**

| Constituent | Part by weight (g) |
|---|---|
| ¹⁴ Desmodur^{®} N3300A | 81.1 |
| ¹³ Minex^{®} 4 | 14.0 |
| ¹³ Type K20 Glass Bubbles | 1.9 |
| ⁷ Cabosil^{®} TS-720 | 3.0 |

| | |
|---|---|
| ¹⁴ Desmodur^{®} N3300A, aliphatic polymeric hexamethylene diisocyanate trimer, available from Covestro LLC. ¹⁵ Minex^{®} 4, nepheline syenite, CAS# 37244-96-5, available from The Cray Company. | |

Desmodur^{®} N3300A and Minex^{®} 4 were weighed into a Max 300 L DAC cup (Flacktek) and dispersed using a FlackTek Speedmixer^{®}. The Type K20 Glass Bubbles and Cabosil^{®} TS-720 were added and dispersed using the FlackTek Speedmixer^{®}.

The components were transferred from the DAC cups to separate Optimum^{®} cartridges using a Flacktek SpeedDisc^{®}. The polyamine and polyisocyanate component were combined in a 1:1 volume ratio, mixed, and printed at 23°C using a ViscoTec 2K extruder mounted on a Lulzbot Taz 6 gantry.

The constituents of the flexible polyurea polyamine component are listed in Table 5.

**Table 5. Flexible polyurea polyamine component.**

| Constituent | Part by weight (g) |
|---|---|
| ¹ Desmophen^{®} NH-1220 | 18.0 |
| ¹¹ Clearlink^{®} 1000 | 7.5 |
| ³ Desmophen^{®} NH-1420 | 1.5 |
| ⁴ Jeffamine^{®} T-5000 | 24.1 |
| ¹⁶ DMS-S51 PDMS | 35.8 |
| ⁷ Cabosil^{®} TS-720 | 4.0 |
| ² Vulcan^{®} XC-72R | 0.5 |
| ¹⁷ Petrolite^{®} 5000 T6 | 5.0 |
| ¹⁸ Finntalc^{®} M03C | 1.0 |
| ¹⁹ Bentone^{®} 34 | 1.0 |
| ²⁰ BYK^{®}-9077 | 0.6 |
| ²¹ Siloxane urethane diol | 1.0 |
| ²² Zirconox^{®} Mill Media | 64.0 |

| | |
|---|---|
| ¹⁶ Silanol-terminated polydimethylsiloxane, CAS# 70131-67-8, product code DMS-551, available from Gelest. ¹⁷ Petrolite^{®} 5000 T6, polyethylene copolymer, available from Baker Hughes. ¹⁸ Finntalc^{®} M03C, association of talc, chlorite, dolomite, and magnesite, available from Mondo Minerals. ¹⁹ Bentone^{®} 34, derivative of bentonite clay, available from Elementis Specialties. ²⁰ BYK^{®}-9077, wetting and dispersing additive, available from BYK. ²¹ Siloxane urethane diol, available from PPG. ²² Zirconox^{®} Milling Media, ceramic micro milling bead size 1.0-1.2 mm, available from Jvoti Ceramic Ind. | |

From Table 5, the Jeffamine^{®} T-5000, Clearlink^{®} 1000, Desmophen^{®} NH-1220, and Desmophen^{®} NH-1420 was weighted into a 16-oz lau jar. Vulcan^{®} XC-72R, Finntalc^{®} M03C, Bentone^{®} 34, siloxane urethane diol, and BYK^{®}-9077 were then added and mixed. The Zirconox^{®} mill media was then added to the lau jar and the formulation was dispersed for 1 h using lau procedures.

The formulation was then filtered through a 125-µm filter into a MAX 300 L DAC cup (FlackTek). The Cabosil^{®} TS-720 and Petrolite^{®} 5000 T6 were added and dispersed using a FlackTek Speedmixer^{®}. Finally, the DMS-S51 PDMS was dispersed into the mixture using a FlackTek Speedmixer^{®}.

The constituents of the flexible polyurea polyisocyanate component are listed in Table 6:

**Table 6. Flexible polyurea polyisocyanate component.**

| Constituent | Part by weight (g) |
|---|---|
| ²³ Polybutadiene-based diisocyanate and isophorone diisocyanate | 97 |
| ⁷ Cabosil^{®} TS-720 | 3 |

| | |
|---|---|
| ²³ Resin mixture of a polybutadiene-based diisocyanate having a MW of 2,800, diluted with isophorone diisocyanate to an equivalent weight of 600. | |

The resin was weighed into a Max^{®} 300 L DAC cup and the Cabosil^{®} TS-720 was added and dispersed using a Speedmixer. The components were transferred from the DAC cups into separate Optimum cartridges using a Flacktek SpeedDisc^{®}. The components were combined and mixed in a 1:1 volume mix ratio in a Viscotec 2K extruder mounted to a Lulzbot Taz 6 gantry.

A coreactive poly(urea-urethane) foam composition was prepared from the components listed in Table 7 and Table 8.

**Table 7. Poly(urea-urethane) foam amine/polyol/water component.**

| Constituent | Part by weight (g) |
|---|---|
| ²⁴ CAPAOO 4101 | 6.63 |
| Deionized water | 3.33 |
| ²⁵ DABCO^{®} 33-LV | 7.17 |
| ⁴ Jeffamine^{®} T-5000 | 115.5 |

| | |
|---|---|
| ²⁴ CAPA^{®} 4101, tetrafunctional polyol terminated with primary hydroxyl groups with an OH equivalent weight of 257 g/mol available from TriiSO. ²⁵ DABCO^{®} 33-LV, amine catalyst, CAS# 280-57-9, commercially available from Air Products & Chemicals. | |

CAPA^{®} 4101, DABCO^{®} 33-LV, Jeffamine^{®} T-5000 and deionized water were added to a Max 200 DAC cup and mixed using a Speedmixer^{®}. The mixture was poured directly into an Optimum^{®} cartridge, suitable for use in 3D printing by reactive extrusion with a Viscotec 2K extruder mounted to a Lulzbot Taz 6 gantry.

**Table 8. Poly(urea-urethane) foam isocyanate-containing component for polyurethane foam.**

| Constituent | Part by weight (g) |
|---|---|
| ²⁶ Diisocyanate polyester prepolymer | 100 |

| | |
|---|---|
| ²⁶ Diisocyanate polyester prepolymer having an equivalent weight of 392 g/mol. | |

The diisocyanate polyester prepolymer was poured directly into an Optimum^{®} cartridge.

The two polyurethane foam components were combined in mixed in a static mixing nozzle attached to a Viscotec 2K extruder at an isocyanate component to amine/polyol/water component volume mix ratio of 1.7:1. The coreactive foam composition was cured at 25°C. The fully cured foam had a hardness of Shore 20A determined according to ASTM D2240.

### Example 3

### Exterior Vehicle Component

An exterior vehicle part was printed using ambient reactive extrusion with a carbon-carbon Michael addition-cured acetoacetate-acrylate composition.

The acetoacetate-containing components was prepared using the constituents listed in Table 9:

**Table 9: Acetoacetate-containing component.**

| Constituent | Part by weight (g) |
|---|---|
| ²⁸ BPAMA | 88 |
| ⁷Cabosil^{®} TS-720 | 3 |
| ²⁹ HB solution | 9 |

| | |
|---|---|
| ²⁸ BPAMA is a proprietary multifunctional acetoacetate (>3 acetoacetate groups per molecule) crosslinker containing a bisphenol A (CAS# 80-05-7) backbone and an acetoacetate equivalent weight of 176 g/mol, available from PPG Industries. ²⁹ HB solution is a solution containing 39 wt% of a hindered guanidine base in a proprietary solvent mixture, available from PPG Industries. | |

BPAMA and HB solution were added to a Max 300 L DAC cup followed by Cabosil^{®} TS-720 and dispersed via Speedmixer. The component was transferred from the DAC cup to an Optimum^{®} cartridge using a Flacktek SpeedDisc^{®}.

The acrylate-containing component was prepared from the constituents listed in Table 10:

**Table 10. Acrylate-containing component.**

| Constituent | Part by weight (g) |
|---|---|
| ³⁰ Miramer^{®} M340 | 64 |
| ⁷ Cabosil^{®} TS-720 | 6 |
| ³¹ Urethane Triacrylate | 30 |

| | |
|---|---|
| ³⁰ Miramer^{®} M340, pentaerythritol triacrylate, CAS# 3524-68-3, commercially available from Miwon. ³¹ A proprietary urethane triacrylate with an acrylate equivalent weight of 270 g/mol, available from PPG Industries. | |

Miramer^{®} M340 and the urethane triacrylate were added to a Max 300 L DAC cup and Cabosil^{®} TS-720 was added and dispersed using a Speedmixer. The component was transferred from the DAC cup to an Optimum^{®} cartridge using Flacktek SpeedDisc^{®}.

The acetoacetate component and the acrylate components were combined and mixed in a volume mix ratio of 1:1 and the coreactive composition was 3D printed into an exterior vehicle part using a Viscotec 2K extruder mounted to a Lulzbot Taz 6 gantry. The coreactive composition was also 3D printed into ASTM D638 Type IV dogbones for tensile testing.

The tensile properties of the cured 3D printed acetoacetate/acrylate part determined according to ASTM D638 are summarized in Table 11.

**Table 11. Physical properties of an acetoacetate/acrylate part.**

| Property | Value |
|---|---|
| Young's modulus | 393 MPa |
| Ultimate tensile strength | 46.1 MPa |
| Elongation at break | 17.4 % |

### Example 4

### Multi-Material Polyurea Lattice

A flexible polyurea coreactive composition was prepared by combining a polyisocyanate component and a polyamine component. The constituents of the polyisocyanate component and the polyamine component are provided in Tables 12 and 13, respectively.

**Table 12. Flexible polyisocyanate component.**

| Component | Part by weight (g) |
|---|---|
| ¹ PolyBD^{®} R45HTLO | 96 |
| ² Stan-Tone^{®} Black Tint Paste | 1 |
| ³ Cabosil^{®} TS-720 | 3 |

**Table 13. Flexible polyamine component.**

| Component | Part by weight (g) |
|---|---|
| ⁴ Desmophen^{®} NH 1220 | 20.7 |
| ⁵ Desmophen^{®} NH 1420 | 11.7 |
| ⁶ Jeffamine^{®} T5000 | 26.8 |
| ⁷ DMS-S51^{®} PDMS | 35.8 |
| ² Stan-Tone^{®} Black Tint Paste | 1.0 |
| ³ Cabosil^{®} TS-720 | 4.0 |

| | |
|---|---|
| ¹ PolyBD^{®} R45 HTLO - proprietary isocyanate Resin. ² Stan-Tone^{®} Black Tint Paste, black pigment paste, commercially available from Polyone Corporation. ³ Cabosil^{®} TS-720 - fumed silica, commercially available from Cabot Corporation ⁴ Desmophen^{®} NH 1220 Amine Resin, CAS# 168253-59-6, commercially available from Covestro LLC. ⁵ Desmophen^{®} NH 1420 Amine Resin, CAS# 136210-30-5 commercially available from Covestro LLC. ⁶ Jeffamine^{®} T-5000 polyetheramine, CAS# 64852-22-8, commercially available from Huntsman Corporation. ⁷ DMS-S51^{®} PDMS, Silanol terminated Polydimethylsiloxane, CAS# 70131-67-8, product code DMS-S51^{®} commercially available from Gelest. | |

To prepare the polyisocyanate component, with the exception of Cabosil^{®} TS-720, the constituents were added to a Max 300 L DAC cup. The mixture was then mixed until homogenous using typical Speedmixer procedures. Cabosil^{®} TS-720 was then added to the Max 300 L DAC cup. The mixture was then mixed using standard Speedmixer procedures. Mixing continued until the Cabosil^{®} TS-720 was uniformly dispersed. A DAC lid with an opening that allowed air to flow out was then placed on the Max 300 L DAC cup. The formulation was then mixed under vacuum at 34473.8 Pa [5.0 psi] for two min using standard typical Speedmixer procedures. After mixing under vacuum, the formulation was transferred from the Max 300 L DAC cup to an Optimum^{®} cartridge using a FlackTek SpeedDisc^{®}.

To prepare the isocyanate component, with the exception of Cabosil^{®} TS-720 and DMS-S51 PDMS, the constituents were added to a Max 300 L DAC cup and mixed until homogenous using standard Speedmixer procedures. Cabosil^{®} TS-720 was then added to the Max 300 L DAC cup and the formulation mixed using standard Speedmixer procedure until the Cabosil^{®} TS-720 was uniformly dispersed in the formulation. DMS-S51 PDMS was then added to the Max 300 L DAC cup containing the homogenous formulation with dispersed Cabosil^{®} TS-720. Mixing continued until the formulation was homogenous. A DAC lid with an opening that allowed air to flow out was then placed on the Max 300 L DAC cup. The formulation was then mixed under vacuum at 34473.8 Pa [5.0 psi] for two minutes using standard Speedmixer procedures. After mixing under vacuum, the formulation was transferred from the Max 300 L DAC cup to an Optimum^{®} cartridge using a FlackTek SpeedDisc^{®}.

A rigid polyurea coreactive composition was prepared by combining a polyisocyanate component and a polyamine component. The constituents of the polyisocyanate component and the polyamine component are provided in Tables 14 and 15, respectively.

**Table 14. Rigid polyisocyanate component.**

| Component | Part by weight (g) |
|---|---|
| ¹Desmodur^{®} N3900 | 94 |
| ²Stan-Tone Orange Tint Paste | 1 |
| ³Cabosil TS-720 | 5 |

**Table 15. Rigid polyamine component.**

| Component | Part by weight (g) |
|---|---|
| ⁴ Desmophen^{®} NH 1420 | 90.6 |
| ² Stan-Tone^{®} Orange Tint Paste | 1.0 |
| ³ Cabosil^{®} TS-720 | 8.4 |

| | |
|---|---|
| ¹ Desmodur N 3900, Polymeric HDI Resin, CAS# 28182-81-2, commercially available from Covestro LLC. ² Stan-Tone Orange Tint Paste, black pigment paste, commercially available from Polyone Corporation. ³ Cabosil TS-720 - fumed silica, commercially available from Cabot Corporation. ⁴ Desmophen NH 1420 Amine Resin, CAS# 136210-30-5 commercially available from Covestro LLC. | |

The rigid polyisocyanate component and the rigid polyamine component were prepared similar to the flexible polyisocyanate and polyamine components, respectively.

Test samples of the flexible and rigid polyurea were prepared by combining the respective polyisocyanate component in a 1:1 vol% ratio and the polyamine component in a 1.7:1 vol% ratio to form the polyurea coreactive compositions and fully cured. The properties of the cured flexible and rigid polyurea materials is presented in Table 16.

The glass transition temperature (T_{g}) was measured by single cantilever dynamic mechanical analysis. The lowest Tg measured is reported. Tensile strength, %elongation and the Young's modulus were determined according to ASTM D638. Shore D hardness was determined according to ASTM D2240.

**Table 16. Properties of flexible and rigid polyureas.**

| Property | Flexible Polyurea | Rigid Polyurea |
|---|---|---|
| Elongation at Break (%) | 793 +/- 186 | 27 +/- 4 |
| Ultimate Tensile Strength (MPa) | 4 +/-1 | 31 +/- 3 |
| Young's Modulus (Pa) | 9 +/- 4 | 783 +/- 39 |
| Hardness (Shore D) | 8 | 67 |
| Lowest Measured T_{g} (°C) | -45 | 94 |

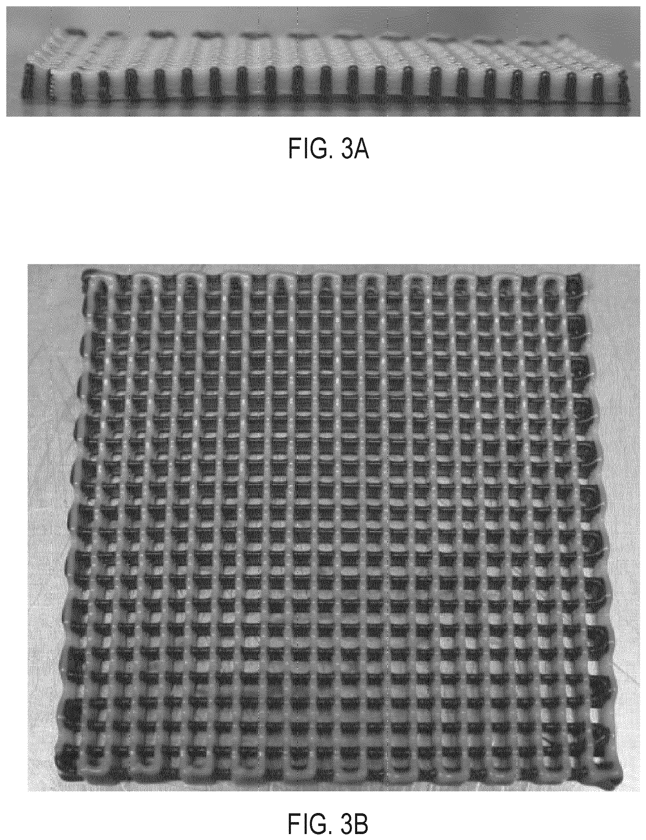

A bi-directional-material lattice consisting of two the flexible and rigid polyureas was fabricated using coreactive three-dimensional printing. The lattice measured 100 mm × 100 mm × 6 mm. The flexible and rigid polyureas were printed at a flow rate of 3.000 mL/min. The flexible polyurea was printed at a 1:1 A:B ratio by volume. The rigid polyurea was printed at a 1.7:1 B:A ratio by volume. Each layer was printed at a speed of 48 mm/sec. The two materials were deposited sequentially in alternating layers in which the flexible polyurea was deposited in a rectilinear pattern aligned in one direction and the rigid polyurea was deposited in a rectilinear pattern aligned in the orthogonal direction. The lattice is shown in FIGS. 3A and 3B where the black structures comprise the flexible polyurea and the orange structures comprise the rigid polyurea. The composite was flexible and did not exhibit brittle failure upon bending parallel to the direction of print lines of the flexible polyurea and is more rigid and exhibited brittle failure upon bending orthogonal to the direction of the flexible polyurea.

Finally, it should be noted that there are alternative ways of implementing the embodiments disclosed herein. Accordingly, the present embodiments are to be considered as illustrative and not restrictive. The scope of the invention is defined by the appended claims.

## Claims

1. An apparatus for coreactive three-dimensional printing, comprising:
an extrusion nozzle (109);
a mixer (101) coupled to the extrusion nozzle (109);
a first primary pump (104) coupled to the mixer (101) and a second primary pump (107) coupled to the mixer (101);
a first primary reservoir (103) coupled to the first primary pump (104) and a second primary reservoir (106) coupled to the second primary pump (107);
one or more secondary reservoirs (112, 113, 114) coupled to the first primary reservoir (103) through respective secondary pumps (115) and/or one or more secondary reservoirs (118, 119, 120) coupled to the second primary reservoir (106) through respective secondary pumps (117); and
a controller interconnected to the first primary pump (104) and the second primary pump (107), wherein the controller is configured to change a volume mix ratio of a first component (102) being pumped by the first primary pump (104) and a second component (105) being pumped by the second primary pump (107);
wherein the extrusion nozzle (109) comprises a coextrusion nozzle.

2. The apparatus of claim 1, wherein each of the first primary pump and the second primary pump is independently and continuously controllable.

3. The apparatus of any one of claims 1 to 2, further comprising one or more additional primary pumps coupled to the mixer (101) and one or more respective primary reservoirs coupled to the one or more additional primary pumps.

4. The apparatus of any one of claims 1 to 3, further comprising a first purge (121) coupled to the first primary reservoir (103) and/or a second purge (122) coupled to the second primary reservoir (106).

5. The apparatus of any one of claims 1 to 4, wherein each of the secondary pumps (115) is independently and continuously controllable.

6. The apparatus of any one of claims 1 to 5, wherein the first primary reservoir (103) contains a first component (102) and the second primary reservoir (106) contains a second component (105).

7. The apparatus of any one of claims 1 to 6, further comprises a shearthinning device coupling the mixer (101) and the extrusion nozzle (109) to reduce the viscosity of a shear thinning material in the coreactive composition before being extruded, the coreactive composition being provided by combining and mixing the first component (102) and the second component (105) in the mixer (101).

## Patentansprüche

1. Ein Gerät zum coreaktiven dreidimensionalen Drucken umfassend:
eine Extrusionsdüse (109);
einen mit der Extrusionsdüse (109) verbundenen Mischer (101);
eine mit dem Mischer (101) verbundene erste Primärpumpe (104) und eine mit dem Mischer (101) verbundene zweite Primärpumpe (107);
ein erstes mit der ersten Primärpumpe (104) verbundenes erstes Primärreservoir (103) und ein mit der zweiten Primärpumpe (107) verbundenes zweites Primärreservoir (106);
ein oder mehrere mit dem ersten Primärreservoir (103) durch entsprechende Sekundärpumpen (115) verbundene sekundäre Reservoir(e) (112, 113, 114) und/oder ein oder mehrere mit dem zweiten Primärreservoir (106) durch entsprechende sekundäre Pumpen (117) verbundene sekundäre Reservoir(e) (118, 119, 120); und
ein mit der ersten Primärpumpe (104) und der zweiten Primärpumpe (107) verbundenes Steuergerät, wobei das Steuergerät konfiguriert ist, ein Volumenmischverhältnis einer ersten Komponente (102), die von der ersten Primärpumpe (104) gepumpt wird und einer zweiten Komponente (105), die von der zweiten Primärpumpe (107) gepumpt wird, zu verändern;
wobei die Extrusionsdüse (109) eine Coextrusionsdüse umfasst.

2. Das Gerät gemäß Anspruch 1, wobei jede der ersten Primärpumpe und der zweiten Primärpumpe unabhängig und kontinuierlich steuerbar ist.

3. Das Gerät gemäß irgendeinem der Ansprüche 1 bis 2, des Weiteren umfassend eine oder mehrere zusätzliche mit dem Mischer (101) verbundene Primärpumpe(n) und eine oder mehrere entsprechende mit der einen oder den mehreren zusätzlichen Primärpumpe(n) verbundene Primärreservoir(e).

4. Das Gerät gemäß irgendeinem der Ansprüche 1 bis 3, des Weiteren umfassend eine mit dem ersten Primärreservoir (103) verbundene erste Spülvorrichtung (121) und/oder eine mit dem zweiten Primärreservoir (106) verbundene zweite Spülvorrichtung (122).

5. Das Gerät gemäß irgendeinem der Ansprüche 1 bis 4, wobei jede der Sekundärpumpen (115) unabhängig und kontinuierlich steuerbar ist.

6. Das Gerät gemäß irgendeinem der Ansprüche 1 bis 5, wobei das erste Primärreservoir (103) eine erste Komponente (102) enthält und das zweite Primärreservoir (106) eine zweite Komponente (105) enthält.

7. Das Gerät gemäß irgendeinem der Ansprüche 1 bis 6, des Weiteren umfassend eine scherverdünnende Vorrichtung, welche den Mischer (101) und die Extrusionsdüse (109) verbindet, um die Viskosität eines strukturviskosen Materials in der coreaktiven Zusammensetzung, bevor sie extrudiert wird, zu reduzieren, wobei die coreaktive Zusammensetzung durch Vereinen und Mischen der ersten Komponente (102) und der zweiten Komponente (105) in dem Mischer (101) bereitgestellt wird.

## Revendications

1. Appareil d'impression tridimensionnelle coréactive, comprenant :
une buse d'extrusion (109) ;
un mélangeur (101) couplé à la buse d'extrusion (109) ;
une première pompe primaire (104) couplée au mélangeur (101) et une deuxième pompe primaire (107) couplée au mélangeur (101) ;
un premier réservoir primaire (103) couplé à la première pompe primaire (104) et un deuxième réservoir primaire (106) couplé à la deuxième pompe primaire (107) ;
un ou plusieurs réservoirs secondaires (112, 113, 114) couplés au premier réservoir primaire (103) par l'intermédiaire de pompes secondaires (115) respectives et/ou un ou plusieurs réservoirs secondaires (118, 119, 120) couplés au deuxième réservoir primaire (106) par l'intermédiaire de pompes secondaires (117) respectives ; et
un dispositif de commande interconnecté à la première pompe primaire (104) et à la deuxième pompe primaire (107), le dispositif de commande étant configuré pour changer un rapport de mélange volumique d'un premier composant (102) qui est pompé par la première pompe primaire (104) et d'un deuxième composant (105) qui est pompé par la deuxième pompe primaire (107) ;
dans laquelle la buse d'extrusion (109) comprend une buse de coextrusion.

2. Appareil selon la revendication 1, dans lequel chaque pompe parmi la première pompe primaire et la deuxième pompe primaire est commandable de manière indépendante et continue.

3. Appareil selon n'importe laquelle des revendications 1 à 2, comprenant en outre une ou plusieurs pompes primaires supplémentaires couplées au mélangeur (101) et un ou plusieurs réservoirs primaires respectifs couplés aux une ou plusieurs pompes primaires supplémentaires.

4. Appareil selon n'importe laquelle des revendications 1 à 3, comprenant en outre une première purge (121) couplée au premier réservoir primaire (103) et/ou une deuxième purge (122) couplée au deuxième réservoir primaire (106).

5. Appareil selon n'importe laquelle des revendications 1 à 4, dans lequel chacune des pompes secondaires (115) est commandable de manière indépendante et continue.

6. Appareil selon n'importe laquelle des revendications 1 à 5, dans lequel le premier réservoir primaire (103) contient un premier composant (102) et le deuxième réservoir primaire (106) contient un deuxième composant (105).

7. Appareil selon n'importe laquelle des revendications 1 à 6, comprenant en outre un dispositif de fluidification par cisaillement couplant le mélangeur (101) et la buse d'extrusion (109) pour réduire la viscosité d'une matière à fluidification par cisaillement dans la composition coréactive avant qu'elle ne soit extrudée, la composition coréactive étant produite par combinaison et mélange du premier composant (102) et du deuxième composant (105) dans le mélangeur (101).
